(19) Europäisches Patentamt / European Patent Office / Office européen des brevets

(11) **EP 2 996 008 B1**

(12) **FASCICULE DE BREVET EUROPEEN**

(45) Date de publication et mention de la délivrance du brevet:
**18.08.2021 Bulletin 2021/33**

(51) Int Cl.:
**G05D 1/06** *(2006.01)* **G08G 5/02** *(2006.01)*

(21) Numéro de dépôt: **15172233.7**

(22) Date de dépôt: **16.06.2015**

(54) **PROCÉDÉ POUR FACILITER L'APPROCHE D'UNE PLATEFORME**

VERFAHREN ZUM ERLEICHTERN DES ANNÄHERNS AN EINE PLATTFORM

A METHOD OF FACILITATING THE APPROACH TO A PLATFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2014 FR 1401431**

(43) Date de publication de la demande:
**16.03.2016 Bulletin 2016/11**

(73) Titulaire: **Airbus Helicopters**
**13725 Marignane Cedex (FR)**

(72) Inventeurs:
• **CANALE, Nicolas**
 **13006 Marseille (FR)**
• **IRAUDO, Lionel**
 **13760 Saint Cannat (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**US-A1- 2010 168 939**

• **DODSON K M ET AL: "A NORTH SEA TRIAL TO INVESTIGATE THE USE OF DIFFERENTIAL GPS FOR INSTRUMENT APPROACHES TO OFFSHORE PLATFORMS", EUROPEAN ROTORCRAFT FORUM, AMSTERDAM, NL, 1 septembre 1997 (1997-09-01), pages 61.1-61.14, XP003032933,**
• **"EGNOS Offshore Helicopter Approach Procedure", GIANT GNSS INTRODUCTION IN THE AVIATOR SECTOR,, 24 janvier 2008 (2008-01-24), pages 1-8, XP003032932,**
• **None**

EP 2 996 008 B1

**Description**

La présente invention concerne un procédé pour faciliter l'approche d'une plateforme à partir d'un aéronef, et notamment d'un aéronef à atterrissage court tel qu'un aéronef muni d'une voilure tournante par exemple.

L'invention se situe donc dans le domaine technique des systèmes d'assistance au pilotage d'un aéronef, et notamment des systèmes automatisés d'aide à l'approche d'installations maritimes pour giravion,

Une telle installation maritime est munie d'un zone d'atterrissage sur laquelle peut atterrir un aéronef, Ainsi, l'installation maritime peut être une plateforme mobile, une plateforme fixe, un bateau voire une barge.

Par commodité, une installation de ce type est dénommé « plateforme » par la suite.

En effet, un aéronef à voilure tournante doit pouvoir repérer et s'approcher en sécurité de plateformes, indépendamment des conditions météorologiques et de visibilité, en évitant les d'obstacles présents dans la zone d'approche.

L'approche est conduite en tenant compte de la direction et de la vitesse du vent dans le secteur, du type de plateforme à approcher (plateformes fixes, mobiles, bateaux ou barges), des obstacles environnants (grues, barges, bateaux servant au positionnement de la plateforme, bateaux type porte containers ou super tanker naviguant autour de la zone d'approche, ou autres plateformes environnantes), du confort des passagers.

Les approches de plateformes sont généralement constituées des segments de vol suivants.

Ainsi, l'approche comporte un segment d'arrivée qui relie le dernier point de vol de la phase de vol en cours et un point initial d'approche connu sous l'acronyme « IAF » soit « Initial Approach Fix » en langue anglaise. Ce segment d'arrivée est parfois positionné à une altitude de 1500 ft. On rappelle que le symbole « ft » fait référence à l'unité de longueur dénommée « feet » en langue anglaise valant 30.48 centimètres.

Un segment d'approche initiale peut relier le point initial d'approche IAF à un point final d'approche connu sous l'acronyme « FAF » soit « Final Approach Fix » en langue anglaise. Ce segment a pour but d'aligner l'appareil, de décélérer et de préparer le segment d'approche finale.

Au moins un segment d'approche finale relie le point final d'approche FAF et un point de décision connu sous l'acronyme « MAP » soit « Missed Approach Point » en langue anglais.

Si un pilote établit un contact visuel avec la plateforme au point de décision, le pilote peut poser l'aéronef sur cette plateforme.

Par contre, un segment dit de remise des gaz doit être suivi si le contact visuel avec la plateforme n'est pas obtenu à ce stade de l'approche. Ce segment de remise des gaz peut par ailleurs être suivi à n'importe quel moment de l'approche si l'équipage le juge utile. L'objet de ce segment de remise des gaz est de rejoindre une altitude de sécurité.

Lorsque les conditions météorologiques sont défavorables, une approche aux instruments est propice au stress de l'équipage qui doit piloter manuellement l'aéronef pour le guider vers une zone où l'acquisition visuelle de la plateforme sera obtenue.

Dans la transition entre la phase de vols aux instruments et la phase de vol visuelle, l'équipage doit basculer en permanence entre ce qui est affiché sur les écrans de pilotage du tableau de bord, et ce qu'il observe à l'extérieur pour détecter un quelconque signe/indice visuel permettant de confirmer la position de la plateforme (lumière, relief). Cette façon d'approcher d'une plateforme n'est donc pas la plus pratique et peut quelquefois créer des erreurs d'interprétation en cas par exemple de brouillard faisant perdre temporairement l'acquisition visuelle de la cible d'atterrissage.

Les approches aux instruments vers une plateforme ou vaisseaux mobiles sont généralement conduites sans l'utilisation d'un calculateur de navigation, connu sous l'acronyme « FMS » soit « Flight Management System » en langue anglaise, et sans couplage au pilote automatique de l'aéronef sur une trajectoire d'approche prédéfinie par le FMS.

Certaines plateformes sont aujourd'hui équipées d'un dispositif, connu sous l'acronyme « NDB » soit « Non Directional Beacon » en langue anglaise, utilisé par l'équipage via le calculateur de navigation comme moyen d'aide à la navigation et de corrélation de la position de l'appareil avec une précision relative mais ce moyen ne permet pas la construction d'un plan de vol d'approche.

On connaît un calculateur de navigation utilisé pour fournir un guidage horizontal lors de la phase en route, la phase de route correspondant à la phase de vol suivie avant la phase de vol d'approche. Pour la phase de vol d'approche, l'équipage détermine un point cible hors route correspondant aux coordonnées de la plateforme à atteindre comme moyen d'aide à la navigation. Cependant, le calculateur de navigation ne segmente pas les différentes phases de l'approche vers la plateforme pour asservir le pilote automatique sur ces données de guidage (déviation horizontale, verticale, consigne de vitesse).

L'approche est alors conduite manuellement ou semi automatiquement via l'assistance de certains modes supérieurs du pilote automatique en utilisant les cartes d'approche publiées par les opérateurs et approuvées par les autorités locales.

Le radar météorologique de l'aéronef peut en outre être utilisé comme moyen d'identification de la plateforme, de détection et d'évitement d'obstacle transitoire ou fixe au cours de l'approche et de la descente finale,

Le document US 2010/0168939 propose un module et un procédé automatisé d'approche d'une plateforme sur une trajectoire d'approche construite à partir de points d'approche.

Selon ce document US 2010/0168939, un pilote saisit dans un module de l'aéronef :

- les coordonnées de la plateforme cible à atteindre,

- une course d'approche finale vers la plateforme,

- une distance de décalage séparant latéralement la trajectoire à suivre d'une trajectoire dirigée vers la plateforme suivant ce cap d'approche,

- une hauteur de descente.

Dès lors, le module de l'aéronef détermine notamment la position du point initial d'approche IAF et du point final d'approche FAF en réponse aux données saisies. L'aéronef est alors dirigé vers le point initial d'approche.

Ainsi, la trajectoire d'approche construite comporte un segment horizontal reliant un point initial d'approche IAF à un point final d'approche FAF.

Ensuite, la trajectoire comprend un segment de descente puis un segment en palier pour relier le point final d'approche FAF» à un point de décision MAP.

Le point initial d'approche IAF, le point final d'approche FAF et le point de décision MAP sont contenus dans un plan vertical parallèle à la course d'approche choisie. On comprend que l'on appelle par « plan vertical » un plan dirigé selon la pesanteur, des points de ce plan vertical pouvant se trouver à des altitudes différentes.

Ce plan vertical est décalé par rapport à la plateforme d'une distance égale à la distance de décalage saisie.

Ce document ne prend alors pas en considération les spécificités des plateformes. En effet, les plateformes ont des formes différentes. L'emplacement d'une zone d'atterrissage d'une plateforme peut ainsi être éloigné des coordonnées de la plateforme saisies.

L'arrière plan technologique inclut aussi les documents suivants :

- Esterline CMC electronics, CMA-9000 flight management system operator's manual, operational program S/W 169-614876-022, publication N°9000-GEN-0105, itel N). 930-6000088-00, august 21.2008

- N.McFarlane, A new procedure for North Sea Helicopter Operations, Second GIANT use forum, Brussels, Belgium, October 9, 2008,

- "EGNOS Offshore Helicopter Approach Procédure", GIANT GNSS INTRODUCTION IN THE AVIATOR SECTOR, 24 janvier 2008. XP003032932,

- K.M Dodson and J.R.A. Stevens, A North Sea trial to investigate the use of Differential GPS for instrument Approaches to Offshore Platforms, paper presented at the 23rd European Rotorcraft Forum, Dresden, Germany, September 1997,

- Advisory circular AC 90-808n date du 4 Décembre 1999.

La présente invention a alors pour objet de proposer, pour un aéronef, un procédé permettant la construction améliorée d'une trajectoire d'approche vers une plateforme cible, ladite trajectoire d'approche étant sûre et fiable indépendamment des spécificités géométriques de la plateforme.

Selon l'invention, un procédé pour faciliter rapproche d'une plateforme avec un aéronef comprend :

- une étape préparatoire pour construire une base de données de plateformes incluant pour chaque pfateforme au moins un attribut, tel qu'un attribut définissant ladite plateforme et par exemple un attribut nommant la plateforme,

- une étape de paramétrage à bord de l'aéronef dans un module de paramétrage pour déterminer les informations suivantes :

  ◦ une course à suivre pour rejoindre une plateforme dite « plateforme cible » à atteindre,

  ◦ un paramètre de hauteur relatif à une attitude minimale de décision MDA d'un point de décision MAP pour une descente en approche finale vers ladite plateforme cible,

- une étape de construction pour construire une trajectoire d'approche mise en œuvre par un module de navigation,

Dès lors, durant l'étape préparatoire, pour au moins une plateforme, on mémorise des attributs définissant au moins une zone cible matérialisant une destination, ladite au moins une zone cible incluant le centre géométrique de la plateforme, lesdits attributs comprenant pour ledit centre géométrique des coordonnées géographiques dudit centre géométrique, au moins une hauteur dudit centre géométrique et un rayon dit « rayon d'obstacle » d'un cercle centrée sur ledit centre géométrique dans lequel est inscrite la plateforme,

En plus, durant l'étape préparatoire, pour au moins une plateforme, on mémorise des attributs, définissant au moins une zone cible de type zone d'atterrissage distincte dudit centre géométrique, lesdits attributs mémorisés incluant des coordonnées géographiques de cette zone d'atterrissage et au moins une hauteur de cette zone d'atterrissage.

Par suite, durant ladite étape de paramétrage, on détermine une distance latérale, et on détermine une zone cible dite « zone cible choisie » sélectionnée parmi les zones cibles mémorisées.

Enfin, durant l'étape de construction, si ladite zone cible choisie correspond au centre géométrique d'une plateforme, on construit ladite trajectoire d'approche en déterminant la position d'un point d'approche initiale IAF, d'un point d'approche finale FAF, d'un point de décision MAP en réponse auxdites informations et auxdits attributs de la zone cible choisie, le point d'approche initiale IAF ainsi que le point d'approche finale FAF et le point de décision MAP étant présents dans un même plan vertical dirigé parallèlement à ladite course, ledit centre géométrique correspondant à ladite zone cible choisie étant décalé par rapport à ce plan vertical d'une distance orthogonale égale à la somme de ladite distance latérale et dudit rayon d'obstacle.

Si, durant l'étape de construction, ladite zone cible choisie correspond à une zone d'atterrissage, on détermine la position du point d'approche initiale IAF, du point d'approche finale FAF, du point de décision MAP en réponse auxdites informations et auxdits attributs de la plateforme cible, le point d'approche initiale IAF ainsi que le point d'approche finale FAF ainsi que le point de décision MAP étant présents dans un même plan vertical dirigé parallèlement à ladite course et, ladite zone d'atterrissage étant décalée par rapport à ce plan vertical d'une distance orthogonale égale à ladite distance latérale.

On rappelle qu'une « hauteur » représente la distance verticale entre un corps et un sol, une « altitude » représentant la distance verticale entre un corps et le niveau de la mer. La hauteur d'un aéronef est usuellement mesurée par une radiosonde par le biais d'ondes électromagnétiques, l'altitude étant mesurée par un altimètre via une mesure de pression.

Par conséquent, la hauteur et l'altitude d'un aéronef ou d'une zone d'atterrissage d'une plateforme au-dessus de la mer font référence à des distances équivalentes si l'on calibre l'altimètre avec la pression ramenée au niveau de la mer, ce qui correspond au QNH. Le QNH représente usuellement la pression barométrique corrigée des erreurs instrumentales, de température et de gravité et ramenée au niveau moyen de la mer suivant les caractéristiques de l'atmosphère standard.

Dès lors, ce procédé met en œuvre une approche selon un plan vertical décalé latéralement par rapport à une plateforme.

De plus, ce procédé introduit un paramètre innovant pour élaborer cette trajectoire d'approche. Ce paramètre innovant est le rayon d'un cercle dans lequel est inscrite la plateforme cible dénommé « obstacle radius » en langue anglaise,

En effet, une plateforme peut comporter une pluralité de zones sur lesquelles un aéronef peut atterrir. De plus, une telle zone peut être relativement éloignée d'une extrémité de la plateforme.

Par suite, une trajectoire fortement décalée latéralement par rapport à une telle zone risque d'être peu décalée par rapport à une extrémité de la plateforme.

Le procédé selon l'invention permet d'y remédier en définissant un centre géométrique et un rayon d'obstacle. Ainsi, la trajectoire d'approche prend en considération les spécificités géométriques de la plateforme cible, contrairement aux trajectoires basées sur des coordonnées d'une plateforme uniquement.

Ainsi, le procédé permet de faciliter le travail d'un équipage en élaborant la trajectoire à suivre facilement L'étape de paramétrage peut d'ailleurs être semi-automatique en proposant des choix par défaut à cet équipage, l'équipage pouvant simplement valider les choix proposés, ou les modifier.

Le procédé peut de plus comporter une ou plusieurs des caractéristiques additionnelles qui suivent.

Ainsi, ce procédé peut inclure une étape de guidage sur le point d'approche initiale IAF calculé. Un organe de guidage guide alors l'aéronef vers ce point d'approche initiale.

L'organe de guidage peut comprendre un module de guidage horizontal et/ou vertical communiquant avec un système de pilotage automatique pour guider l'aéronef le long de la trajectoire d'approche élaborée par le modula de navigation.

Par exemple, le module de paramétrage, le module de navigation, un module de guidage horizontal et un module de guidage vertical sont implémentés dans un calculateur de navigation connu sous l'acronyme FMS (« Flight Management System » en langue anglaise). Ce calculateur de navigation peut alors fournir des données de guidage à un système de pilotage automatique pour guider l'aéronef sur la trajectoire élaborée.

Eventuellement il est aussi possible d'afficher des informations sur des instruments de pilotage pour que le pilote dirige manuellement l'aéronef le long de la trajectoire élaborée. Par exemple, un cap optimal à suivre ou une vitesse de descente sont affichés pour aider le pilote à suivre cette trajectoire. Ce cap est par exemple choisi pour placer l'aéronef face au vent.

Par suite, la base de données peut comprendre pour au moins une plateforme des attributs incluant :

- le nom de la plateforme,

- des données relatives au centre géométrique de la plateforme à savoir les coordonnées géographiques de ce centre géométrique, une hauteur de ce centre géométrique et le rayon d'obstacle de la plateforme,

- des données relatives à au moins une zone d'atterrissage, à savoir les coordonnées géographiques de cette zone d'atterrissage, au moins une hauteur de cette zone d'atterrissage,

Selon cette variante, un opérateur choisit une plateforme cible puis une zone cible.

Toutefois, le nom de la plateforme n'est pas obligatoire. Chaque zone d'atterrissage et chaque centre géométrique peut par exemple inclure un attribut comprenant à la fois un identifiant et le nom de la plateforme.

Dès lors, il n'est pas nécessaire de choisir une plateforme puis une zone de cette plateforme.

Par ailleurs, la hauteur du centre géométrique peut être rendue égale à la hauteur de la zone d'atterrissage la plus élevée.

Dès lors, un opérateur peut choisir de diriger l'aéronef vers la plaleforme en sélectionnant directement ou indirectement une zone cible pouvant être soit le centre géométrique, soit une zone d'atterrissage d'une plateforme.

Par exemple, un calculateur de navigation affiche sur un écran ce centre géométrique, les zones d'atterrissage et la course à suivre. Dès lors, l'opérateur peut considérer qu'une trajectoire basée sur le centre géométrique risque de positionner le point de décision MAP à une distance importante d'une zone d'atterrissage.

Si la géométrie de la plateforme le permet, l'opérateur peut alors préférer choisir une zone cible de type zone d'atterrissage.

Par ailleurs, durant l'étape de paramétrage :

- soit un pilote paramètre manuellement ladite altitude minimale de décision SIDA,

- soit on détermine automatiquement avec le module de navigation ladite altitude minimale de décision MDA, cette altitude minimale de décision MDA étant la valeur maximale entre d'une part une altitude seuil et, d'autre part la somme de ladite hauteur de la zone cible choisie et d'une constante minimale de décision prédéterminée par le constructeur.

Ainsi, l'équipage peut choisir un paramétrage manuel pour déterminer l'altitude minimale de décision MDA. A cet effet, l'équipage peut saisir cette altitude minimale de décision MDA, ou valider une altitude par défaut par exemple.

Toutefois, l'unité de navigation peut aussi déterminer automatiquement l'altitude minimale de décision MDA adéquate selon des relations mémorisées et établies par le constructeur.

Par exemple, l'altitude minimale de décision MDA est la valeur maximale entre d'une part une altitude seuil et, d'autre part la somme de ladite hauteur d'atterrissage et d'une constante.

Notamment, le module de navigation peut déterminer l'heure d'arrivée sur la plateforme, l'altitude seuil variant selon cette heure d'arrivée.

Par exemple, l'altitude seuil peut s'élever durant un vol de jour à 200 ft par exemple, et durant un vol de nuit à 300 ft.

A cet effet, le module de navigation fait appel à des vitesses d'avancement prédéterminées et mémorisées entre les divers points de passage calculés pour estimer l'heure d'arrivée.

La première variante et la deuxième variante sont compatibles entre elles. Ainsi, un équipage peut choisir durant l'étape de paramétrage l'une ou l'autre de ces variantes.

Par ailleurs, durant l'étape de paramétrage, on peut choisir un côté de décalage du plan vertical par rapport à la plateforme cible.

L'équipage peut choisir de positionner le point de décision à gauche ou à droite de la plateforme cible, la gauche et la droite s'entendant selon le sens de déplacement de l'aéronef vers la plateforme.

A titre de variante ou de complément, le procédé peut imposer un côté de décalage. Par exemple, la base de données peut spécifier un côté de décalage, pour éviter un obstacle identifié par exemple.

En outre, le point de décision MAP peut être positionné en déterminant une distance longitudinale D1 le séparant d'un plan tangent passant par les coordonnées géographiques de la zone cible choisie et orthogonal au plan vertical selon la relation suivante :

$$DI = D0 / \tan(\alpha)$$

où « / » représente le signe de la division, « D0 » représente ladite distance orthogonale, « $\alpha$ » représente un angle de décalage fixé par le constructeur. Cet angle de décalage peut être de l'ordre de 30 degrés par exemple,

En outre, le point d'approche finale FAF peut être positionné à une altitude minimale de sécurité MSA, ladite altitude minimale de sécurité MSA étant égale à la valeur maximale entre d'une part une altitude minimale de sécurité seuil et. d'autre part, la somme d'une hauteur d'un sommet de la plateforme cible et d'une constante minimale de sécurité prédéterminée par le constructeur.

Par ailleurs, le point d'approche finale FAF est éventuellement positionné à une distance d'approche finale du point de décision MAP égale à

$$DFAF = k1 + \frac{MSA - MINI}{\tan \beta}$$

où « DFAF » représente la distance d'approche finale, « k1 » représente une constante d'approche fixée par le constructeur par exemple de l'ordre de un mile nautique, « MSA » représente une altitude minimale de sécurité à laquelle est positionné le point d'approche finale, « MINI » représente ladite altitude minimale de décision MDA, « $\beta$ » représente l'angle d'un segment de vol en descente reliant le point d'approche finale à un plan horizontal contenant ledit point de décision (MAP) par exemple de l'ordre de 3.75 degrés.

En outre, le point d'approche initiale IAF peut être positionné à l'attitude minimale de sécurité MSA du point d'approche finale FAF.

Ce point d'approche initiale IAF est en outre éventuellement positionné à une distance d'approche initiale du point de décision MAP égale à

$$DIAF = k1 + \frac{MSA - MINI}{\tan \beta} + k2$$

où « DIAF » représente la distance d'approche initiale, « k1 » représente une constante d'approche fixée par le constructeur, « k2 » représente une variable figée par le constructeur par exemple de l'ordre de deux mile nautique, « MSA », représente une altitude minimale de sécurité à laquelle est positionné le point d'approche finale, « MINI » représente ladite altitude minimale de décision MDA, « $\beta$ » représente l'angle d'un segment de vol en descente reliant le point d'approche finale à un plan horizontal contenant ledit point de décision MAP .

Selon une variante, la trajectoire d'approche comprend un point de palier LPO interposé entre le point d'approche finale FAF et le point de décision MAP, le point de palier étant placé à la même altitude minimale de décision MDA que le point de décision MAP et à une distance de palier du point de décision MAP égale à

$$DLPO = k1$$

où « DLPO » représente la distance de palier, « k1 » représente une constante d'approche fixée par le constructeur.

On rappelle que l'unité « Nm » fait référence à un mile nautique équivalent à 1852 mètres.

Par ailleurs, selon une variante :

- durant ladite étape préparatoire, pour chaque plateforme on mémorise un attribut relatif à une erreur de positionnement TPE de la plateforme,

- préalablement à une phase de vol d'approche débutant au point d'approche initiale IAF, on détermine avec un module de contrôle d'intégrité la valeur d'une performance d'intégrité de position requise pour un système de localisation de l'aéronef, cette performance d'intégrité de position étant égale à la valeur minimale entre d'une part une performance seuil prédéterminée et, d'autre part, le quotient de la différence de ladite distance latérale moins ladite erreur de positionnement de la plateforme cible divisée par deux soit :

$$RNP = \min\left[(LOV - TPE)/2; k3\right]$$

où « RNP » représente la performance d'intégrité de position requise , « LOV » représente ladite distance latérale. « TPE » représente ladite erreur de positionnement, « k3 » représente ladite performance seuil prédéterminée par exemple égal à une valeur de 0.3 Nm, « / » représente le signe de la division,

- durant une étape de surveillance mise en œuvre lors de ladite phase de vol d'approche, ledit aéronef étant muni d'un système de localisation GNSS déterminant le rayon d'un cercle dans lequel ledit aéronef se situe dit « rayon d'intégrité de position HPL »,

  ◦ on compare avec ledit module de contrôle d'intégrité la performance d'intégrité de position RNP et ledit rayon d'intégrité de position HPL,

  ◦ on génère une alerte si ledit rayon d'intégrité de position HPL est supérieur à la performance d'intégrité de position RNP

Lors de la phase de vol d'approche, l'aéronef peut être guidé par un système de localisation GNSS usuel pouvant utiliser différentes constellations telles que GPS, GALILEG, WAAS, EGNOS... ou bien par un système de localisation GNSS hybridé avec une centrale inertielle pour renforcer l'intégrité de la position calculée.

Néanmoins, un tel système de localisation GNSS comporte une incertitude de positionnement plus ou moins importante compte tenu notamment de la géométrie de la constellation du système de localisation GNSS utilisé et des erreurs de mesure de chaque satellite de la constellation dudit système GNSS utilisé.

Dès lors, un pilote peut penser que l'aéronef suit la trajectoire élaborée, alors que cet aéronef suit une trajectoire réelle parallèle à la trajectoire élaborée. Si l'intégrité de position fournie par le système de localisation GNSS est insuffisante, cette trajectoire réelle peut conduire l'aéronef vers une position trop proche de la plateforme cible ce qui peut engendrer des risques de conflits contraires au but recherché visant à maîtriser la trajectoire d'approche.

Cette problématique est en outre associée au fait qu'une plateforme n'est pas totalement immobile sur l'eau. Les moyens d'immobilisation d'une plateforme laissent en effet une liberté de mouvement à la plateforme. Ainsi, une plateforme peut évoluer dans un cercle ayant pour rayon l'erreur de positionnement TPE.

Une plateforme fixe a alors classiquement une erreur de positionnement TPE réduite, alors qu'une plateforme mobile peut avoir une erreur de positionnement TPE plus élevée.

Chaque plateforme mémorisée est alors associée à un attribut de de type erreur de positionnement TPE.

Cette variante vise alors à éviter que l'aéronef se dirige droit vers une plateforme cible.

Par suite, un module de contrôle détermine la valeur de la performance d'intégrité de position RNP en fonction de la valeur du décalage latéral et de l'erreur de positionnement. La valeur de la performance d'intégrité de position est dite plus simplement « performance d'intégrité de position ».

Lors de la phase de vol d'approche, le module de contrôle compare la performance d'intégrité de position RNP au rayon d'intégrité de position HPL.

Classiquement, un système de localisation GNSS usuel détermine non pas une position de l'aéronef, mais un cercle dans lequel se trouve l'aéronef, ce cercle étant centré sur une position géographique et présentant le rayon d'intégrité de position HPL. Le système de localisation GNSS peut aussi évaluer un cercle dans lequel se trouvera l'aéronef à cour terme, ce cercle étant centré sur une position géographique prédictive et présentant un rayon dit rayon prédit.

Dès lors, le système de localisation peut transmettre le rayon d'intégrité de position HPL au module de contrôle.

Si le rayon d'intégrité de position HPL est supérieur à la performance d'intégrité de position RNP, une alerte est générée pour interrompre l'approche.

Dès lors le procédé permet de vérifier que la précision d'un système de localisation ne risque pas de conduire l'aéronef sur une plateforme, au lieu de lui faire suivre une trajectoire décalée par rapport à cette plateforme.

En parallèle, l'aéronef peut comporter un indicateur de situation horizontale (communément appelé CDI pour « Course Déviation Indicator » en anglais) muni d'une échelle comprenant une pluralité de plots, ledit indicateur de situation horizontale positionnant sur ladite échelle un premier symbole centré au milieu de l'échelle matérialisant la trajectoire d'approche et un deuxième symbole matérialisant l'écart de position latéral de l'aéronef par rapport à la trajectoire d'approche à suivre (dite « cross track » en langue anglaise), l'écartement entre ledit premier symbole et le deuxième plot adjacent représentant la valeur de la performance d'intégrité de position.

Ainsi, l'échelle comporte un premier plot adjacent au premier symbole, et un deuxième plot adjacent au premier plot. Par suite, le premier plot est situé à mi-distance entre le premier symbole et le deuxième plot dit « deuxième plot adjacent ».

Un tel indicateur permet à un pilote de suivre une trajectoire. Dès lors, on asservit la taille de l'échelle de l'indicateur à la valeur de la performance d'intégrité de position RNP.

Cette caractéristique vise aussi à éviter de diriger de manière involontaire l'aéronef vers la plateforme.

Si le deuxième symbole représentant l'écart de position latéral de l'aéronef s'écarte au-delà du premier plot le plus proche du milieu de l'échelle, alors l'approche doit être interrompue par l'équipage. Dès lors, si le deuxième symbole est affiché entre le premier plot et le deuxième plot par exemple, l'approche doit être interrompue.

En outre, la performance seuil prédéterminée peut avoir une valeur de 0.3 Nm (Nautique mile).

Par ailleurs, selon une première variante :

- durant ladite étape préparatoire, pour chaque plateforme on mémorise un attribut relatif à une erreur de positionnement de la plateforme,

- durant ladite étape de paramétrage, on détermine une distance latérale en :

    ◦ calculant automatiquement la valeur d'une distance théorique minimale égale à la somme de ladite erreur de positionnement de la plateforme cible, d'une marge prédéterminée et du double d'une valeur maximale entre d'une part ledit rayon d'intégrité de position et, d'autre part, un rayon prédit fourni par le système de localisation GNSS indiquant le rayon d'intégrité de position qui sera atteint à l'issue d'un temps prédéterminé soit :

$$COMPUTED\ LOV = 2*max[HPL;HPL5']+HPL\ BUFFER+TPE$$

    Où « COMPUTED LOV » représente ladite distance théorique minimale, « TPE » représente ladite erreur de positionnement, « HPL BUFFER » représente ladite marge, « HPL » représente ledit rayon d'intégrité de position, « HPL5' » représente ledit rayon prédit, « * » représente le signe de la multiplication,

    ◦ en comparant ladite distance théorique minimale à des distances mémorisées dans une liste, ladite distance latérale étant égale à la plus petite distance mémorisée supérieure à ladite distance latérale théorique minimale.

Selon cette première variante, la distance latérale à utiliser est déterminée automatiquement en fonction d'une part d'une constante relative à une erreur de positionnement de la plateforme cible et, d'autre part, de l'intégrité de position fournie par le système de localisation GNSS.

Par suite, cette variante tend à au moins limiter les risques de générer une trajectoire qui pourrait conduire l'aéronef directement vers la plateforme cible ou vers une position trop proche de la plateforme compte tenu de l'imprécision de mesure des données utilisées.

Selon une deuxième variante, durant l'étape de paramétrage, ladite distance latérale est fixée à une valeur prédéterminée mémorisée.

Selon cette variante, le système utilise dans un premier temps une distance latérale fixée par le constructeur.

Selon une troisième variante, durant l'étape de paramétrage, la distance latérale est choisie par un pilote à partir d'une liste comprenant une pluralité de distances latérales mémorisées.

Ces trois variantes peuvent être implémentées sur un même système. Dès lors, le pilote peut choisir la variante à mettre en œuvre, en fonction des conditions de vol par exemple.

Pa ailleurs, suite à l'étape de construction, on autorise la modification de ladite trajectoire jusqu'à un point de fixation prédéterminé situé en amont dudit point d'approche initiale.

Par exemple, un pilote peut modifier la trajectoire en modifiant les données ayant conduits à sa construction.

Le point de fixation peut être calculé en fonction de la position un point dénommé « point de virage TP » ou « turning point » en langue anglaise. Ce point de virage correspond au point à partir duquel l'aéronef doit effectuer un virage pour rallier le point d'approche initiale IAF.

Ainsi, le point de fixation peut correspondre aux coordonnées géographiques qui seront atteintes par exemple une minute avant le point de virage TP.

Par ailleurs, durant l'étape préparatoire, pour chaque plateforme on mémorise un attribut relatif à une erreur de positionnement TPE de la plateforme, et durant une étape de vérification réalisée préalablement à ladite phase de vol d'approche et suite à ladite étape de construction :

- on détermine si une distance latérale dite « distance latérale courante » ayant servie à l'élaboration de la trajectoire est compatible avec le rayon d'intégrité de position calculée par le système de localisation GNSS de l'aéronef en :

◦ calculant automatiquement la valeur d'une distance théorique minimale égale à la somme de ladite erreur de positionnement de la plateforme cible, d'une marge prédéterminée et du double d'une valeur maximale entre d'une part ledit rayon d'intégrité de position et, d'autre part, un rayon prédit fourni par le système de localisation GNSS indiquant le rayon d'intégrité de position qui sera atteint à l'issue d'un temps prédéterminé soit :

$$COMPUTED\ LOV = 2*max[HPL;HPL5']+HPL\ BUFFER+TPE$$

où « COMPUTED LOV » représente ladite distance théorique, « TPE » représente ladite erreur de positionnement, « HPL BUFFER » représente ladite marge, « HPL » représente ledit rayon de localisation, « HPL5' » représente ledit rayon prédit, « * » représente le signe de la multiplication,

◦ en comparant ladite distance latérale courante à ladite distance théorique

- lorsque ladite distance latérale courante est inférieure à ladite distance théorique, une liste comprenant une pluralité de distances mémorisées :
  ◦ on abandonne ladite approche si ladite plus grande distance mémorisée est inférieure à ladite distance théorique, ou

- on augmente ladite distance latérale courante pour obtenir une distance latérale amendée, cette distance latérale amendée étant égale à la plus petite distance mémorisée dans ladite liste qui est supérieure à ladite distance théorique, puis on remet en œuvre ladite étape de construction en remplaçant ladite distance latérale courante par ladite distance latérale amendée.

Ainsi, le procédé comprend une étape de vérification interposée entre l'étape de construction et la phase de vol d'approche.

Cette étape de vérification vise à vérifier avant la phase de vol d'approche que la distance latérale courante ayant donnée naissance à la trajectoire de la phase de vol d'approche et la performance seuil prédéterminée associée sont compatibles avec l'intégrité de position fournie par le système de localisation GNSS guidant l'aéronef.

Dans la négative, deux alternatives sont alors envisagées.

Si la liste mémorisée comprend une distance latérale compatible avec l'intégrité de position fournie par ce système de localisation GNSS, une nouvelle trajectoire d'approche est élaborée en prenant en considération cette distance latérale dite « distance latérale amendée ».

Une alerte peut être générée pour alerter l'équipage.

Par contre, si la liste mémorisée ne comprend pas une distance latérale compatible avec l'intégrité de position fournie par ce système de localisation GNSS, l'approche doit être abandonnée. Une alerte est donc générée à cet effet.

Cette étape de vérification peut par ailleurs être mise en oeuvre automatiquement ou sur requête tant qu'un point de passage prédéterminé n'est pas atteint.

Selon une première alternative, on autorise la mise en œuvre de ladite étape de vérification tant que l'aéronef est situé par exemple à plus de trois minutes du point d'approche initiale IAF.

Selon une deuxième alternative, on autorise la mise en œuvre de ladite étape de vérification tant que l'aéronef est situé par exemple à plus de deux minutes d'un point de virage à partir duquel l'aéronef doit effectuer un virage pour rallier ledit point d'approche initiale IAF.

Ces deux alternatives sont compatibles. Par exemple, l'étape de vérification devient impossible à mettre en œuvre si l'aéronef se situe à moins de trois minutes du point d'approche initiale IAF ou à moins de deux minutes d'un point de virage.

L'invention et ses avantages apparaîtront avec plus de détails dans le cadre de la description qui suit avec des exemples donnés à titre illustratif en référence aux figures annexées qui représentent :

- la figure 1, un schéma présentant un aéronef mettant en œuvre le procédé selon l'invention,

- la figure 2, un schéma présentant un calculateur de navigation de cet aéronef,

- la figure 3. un schéma présentant le procédé selon l'invention,

- les figures 4 à 9, des schémas explicitant une étape de paramétrage, et

- la figure 10, un schéma présentant la trajectoire d'approche construite,

- les figures 11 et 12, des schémas explicitant l'étape de vérification et l'étape de contrôle.

Les éléments présents dans plusieurs figures distinctes sont affectés d'une seule et même référence.

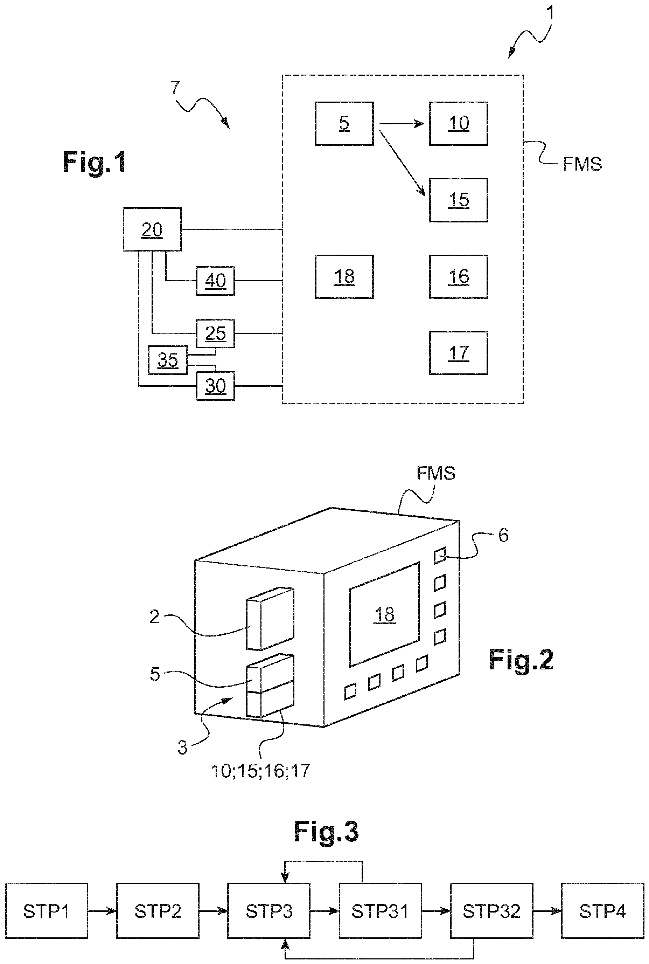

La figure 1 présente un aéronef 1, et notamment un aéronef à voiture tournante pouvant se poser sur une plateforme en mer.

Cet aéronef 1 est muni d'un système 7 d'aide à la navigation incluant une base de données 5 embarquée communiquant avec un module de paramétrage 10.

Le module de paramétrage 10 inclut par exemple un écran de visualisation, des moyens de saisie manœuvrables par un équipage, une mémoire et un organe de calcul de type processeur par exemple exécutant des instructions mémorisées.

De plus, le système d'aide à la navigation inclut un module de navigation 15 pouvant être relié à la fois à la base de données 5 et au module de paramétrage 10. En fonction d'éléments transmis par la base de données 5 ainsi que par le module de paramétrage 10 et le cas échéant d'éléments mémorisés, le module de navigation 15 élabore automatiquement une trajectoire d'approche.

Le module de navigation 15 inclut par exemple un écran de visualisation, des moyens de saisie manœuvrables par un équipage, une mémoire et un organe de calcul de type processeur par exemple exécutant des instructions mémorisées.

Le module de navigation 15 peut alors communiquer avec un module de guidage vertical 25 et / ou avec un module de guidage horizontal 30 qui génèrent des consignes transmises à un système de pilotage automatique 35. Le système de pilotage automatique agit alors sur des moyens de commande pour diriger l'aéronef. On se référera à la littérature pour obtenir des informations relatives à un tel système de pilotage automatique ou à des modules de guidage.

Chaque module de guidage peut en outre communiquer avec un système de localisation GNSS 20. Ce système de localisation GNSS 20 peut être un système usuel ou hybridé avec une centrale inertielle.

Le module de navigation peut aussi communiquer avec des instruments de bord, via éventuellement les modules de guidage. Ainsi, des données relatives aux actes à réaliser pour suivre la trajectoire élaborée peuvent être affichées sur des instruments de bord de l'aéronef.

Notamment, le système 7 peut comprendre un indicateur de situation horizontale 40 relié au système de localisation GNSS 20 pour afficher la trajectoire à suivre et une représentation de l'aéronef par rapport à cette trajectoire.

Par ailleurs, le système peut comprendre un module de vérification 17 pour vérifier que la trajectoire élaborée est compatible avec l'intégrité de position calculée par le système de localisation GNSS 20. Le module de vérification 17 inclut par exemple un écran de visualisation, des moyens de saisie manœuvrables par un équipage, une mémoire et un organe de calcul de type processeur par exemple exécutant des instructions mémorisées.

En outre, le système peut comprendre un module de contrôle d'intégrité 16 pour vérifier lors d'une phase de vol d'approche que la trajectoire suivie est compatible avec l'intégrité de position courante calculée par le système de localisation GNSS 20. Le module de contrôle d'intégrité 16 inclut par exemple un écran de visualisation, des moyens de saisie manœuvrables par un équipage, une mémoire et un organe de calcul de type processeur par exemple exécutant des instructions mémorisées.

Par exemple, au moins un des modules de paramétrage 10, de navigation 15, de contrôle d'intégrité 16 et de vérification 17 est une partie constitutive d'un calculateur de navigation FMS (« Flight Management System » en langue anglaise).

En référence à la figure 2, ce calculateur de navigation FMS comprend un boîtier portant un écran 18 et de multiples boutons 6. Ce boîtier accueille une unité de calcul 2 exécutant des instructions mémorisées dans une unité de stockage 3.

Dès lors, cette unité de stockage 3 peut comprendre au moins une mémoire stockant des instructions sous forme de segments de code par exemple.

Des segments de code associés à l'unité de calcul peuvent alors représenter respectivement les modules de paramétrage 10, de navigation 15, de contrôle d'intégrité 16 et de surveillance d'approche 17.

De même, la base de données 5 peut être mémorisée dans une mémoire de l'unité de stockage 3.

Un tel calculateur de navigation FMS est alors en communication par de multiples interfaces avec le système de localisation GNSS 20, l'indicateur de situation horizontale 40, le module de guidage vertical 25 et/ ou le module de guidage horizontal 30.

La figure 3 présente diverses étapes d'un procédé selon l'invention mis en œuvre par un système 7 d'aide à la navigation.

Durant une étape préparatoire STP1, un utilisateur élabore la base de données 5. Cet utilisateur établit une liste de plateformes susceptibles de constituer une destination pour ses aéronefs.

Dès lors, l'utilisateur mémorise dans la base de données 5 une pluralité d'attributs pour chaque plateforme sélectionnée. Ces attributs peuvent inclure un identifiant ID de la plateforme.

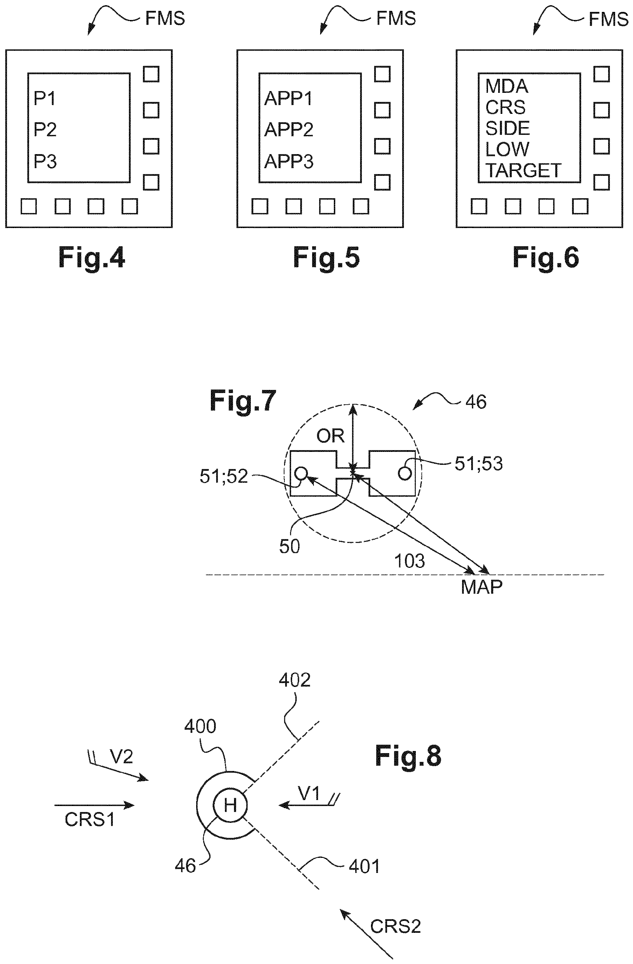

De plus et en référence à la figure 7, ces attributs définissent au moins une zone cible par plateforme.

La base de données 5 peut être dépourvue d'un identifiant des plateformes. Dès tors, l'identifiant des zones cibles peut par exemple comprendre une référence au nom de la plateforme correspondant.

Notamment, ces attributs définissent une zone cible matérialisée par un centre géométrique 50 de la plateforme 46. Ainsi, les attributs incluent les coordonnées géographiques de ce centre géométrique 50, une hauteur de ce centre géométrique et le rayon dit « rayon d'obstacle » OR d'un cercle centré sur le centre géométrique 50 dans lequel est inscrite la plateforme.

De plus, ces attributs peuvent définir au moins une zone cible matérialisant une zone d'atterrissage 51. Ainsi, les attributs incluent les coordonnées géographiques de cette zone d'atterrissage et une hauteur de cette zone d'atterrissage.

En outre, ces attributs peuvent comprendre une hauteur maximale de la plateforme, à savoir la hauteur du sommet de la plateforme.

De plus, chaque zone cible d'une plateforme peut être associée à un attribut qualifiant une erreur de positionnement de la plateforme.

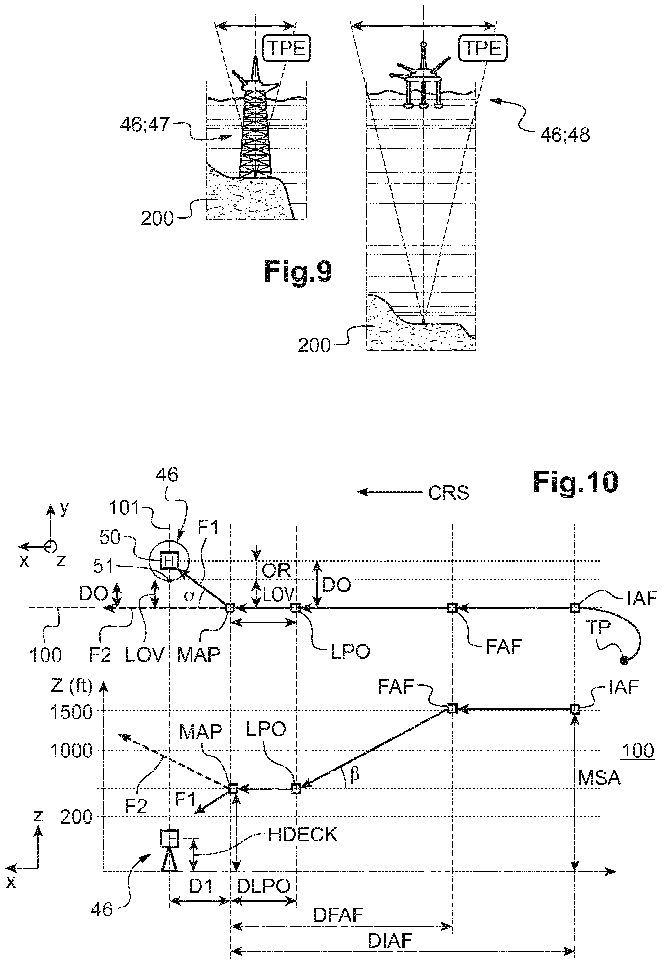

En référence à la figure 9, une plateforme 46 peut être une plateforme dite « fixe » 47 reposant sur le fond 200 d'une mer.

Dès lors, la liberté de mouvement de le plateforme fixe 47 autour des coordonnées géographiques des zones cibles mémorisés est faible. L'erreur de positionnement TPE d'une telle plateforme fixe est alors relativement faible.

Par contre, une plateforme 46 peut être une plateforme dite « mobile » 48 ancrée sur le fond 200 d'une mer. Dès lors, la liberté de mouvement de la plateforme mobile 48 autour des coordonnées géographiques des zones cibles mémorisées est importante. L'erreur de positionnement TPE d'une telle plateforme mobile est alors relativement importante.

Par conséquent, la base de données associe chaque zone cible à de multiples attributs, ces attributs incluant des informations propres à la plateforme correspondante et / ou propre à la zone cible.

En référence à la figure 3, l'équipage d'un aéronef peut mettre en œuvre une étape de paramétrage STP2 pour paramétrer l'approche vers une plateforme.

A cet effet, une pluralité d'informations sont paramétrées ou paramétrables durant cette étape de paramétrage STP2.

Ainsi, l'équipage peut choisir la plateforme cible sur laquelle l'aéronef doit atterrir.

En référence à la figure 4, le module de paramétrage 10 peut présenter la liste des plateformes P1, P2, P3 mémorisées dans la base de données 5. L'équipage peut par exemple sélectionner la plateforme P1 sur le calculateur de navigation FMS.

En référence à la figure 5 et de manière optionnelle, le module de paramétrage 10 peut par exemple présenter différents types d'approches disponibles. Il est à noter que la base de données peut éventuellement comporter un attribut pour les plateformes mémorisées faisant référence à ces types d'approches.

Cette liste d'approche peut notamment comprendre une approche de type ARA, ou encore une approche de type DELTA30 OSAP, ou une approche de type OFFSET selon l'invention.

En référence à la figure 6, le module de paramétrage 10 permet à l'équipage de l'aéronef de paramétrer d'autres informations. Le module de paramétrage 10 peut par exemple présenter des valeurs par défaut pour les informations à paramétrer, permettre à un utilisateur de choisir des valeurs parmi une liste, ou peut encore exécuter des instructions pour calculer lesdites informations en fonction de données annexes.

Durant cette étape de paramétrage, le système 7 permet de paramétrer la zone cible de la plateforme à atteindre, représentée par l'expression « TARGET » selon l'exemple de la figure 6. L'équipage sélectionne alors une zone cible parmi la liste de zone cibles associées à la plateforme cible choisie.

Selon une variante, un opérateur peut choisir directement une zone cible, sans déterminer au préalable une plateforme cible à atteindre.

De plus, le système 7 permet de paramétrer une altitude minimale de décision MDA à laquelle se trouve le point de décision MAP.

Selon une première variante, l'équipage spécifie que l'altitude minimale de décision MDA doit être paramétrée manuellement, et effectue un tel paramétrage. Le constructeur peut imposer une altitude minimale de décision à respecter par sécurité. Par exemple, le constructeur peut décider que l'altitude minimale de décision MDA ne doit pas être inférieure à 300 ft, ou encore à la somme de la hauteur de la zone cible choisie et d'une marge de sécurité. Cette marge peut être de l'ordre de 50 ft.

Selon une deuxième variante, l'équipage spécifie que l'altitude minimale de décision MDA doit être paramétrée automatiquement.

Dès lors, l'altitude minimale de décision MDA est soit une altitude seuil, soit la somme de la hauteur HDECK de la zone cible choisie et d'une constante minimale de décision prédéterminée par le constructeur. La valeur la plus haute est utilisée par la suite.

L'altitude seuil peut dépendre des conditions de visibilité, et notamment d'un atterrissage de jour ou de nuit.

Ainsi, l'altitude seuil peut être de 200 ft lors d'un atterrissage de jour et de 300 ft lors d'un atterrissage de nuit.

Par conséquent, le module de navigation 15 peut le cas échéant faire un prétraitement pour estimer l'heure d'arrivée sur la plateforme cible munie de la zone cible choisie afin de déterminer si l'atterrissage va se produire de jour ou de nuit.

Selon l'exemple présenté, l'équipage peut le cas échéant choisir un côté de décalage SIDE pour déterminer où doit se trouver la plateforme par rapport au plan vertical contenant le point de décision MAP.

Ce point de décision correspond à un point où l'équipage doit choisir soit de se diriger vers la plateforme pour procéder à l'atterrissage, soit de mettre en œuvre une procédure alternative si l'atterrissage s'avère impossible.

Le module de paramétrage 10 permet notamment durant l'étape de paramétrage STP2 de paramétrer une course CRS à suivre pour atteindre la zone cible choisie.

La course peut être paramétrée manuellement par l'équipage.

Toutefois et en référence à la figure 8, la course CRS peut être déterminée automatiquement par le système 7.

En effet, le système 7 peut comprendre un dispositif météorologique relié au calculateur de navigation pour lui transmettre le sens du vent V1, V2 au niveau de la plateforme cible.

Ce sens du vent peut aussi être paramétré par l'équipage.

Dès lors, le calculateur de navigation consulte la base de données pour déterminer si la zone cible choisie est associée à un secteur angulaire d'approche 400.

Dans la négative, la course paramétrée est alors choisie pour se produire dans le vent.

A l'inverse, le calculateur de navigation détermine si une course dans le vent serait contenue dans le secteur angulaire d'approche 400. Dans l'affirmative, la course paramétrée est alors choisie pour se produire dans le vent. Dans la négative, la course paramétrée est alors choisie pour être dirigée selon la plus proche limite 401, 402 du secteur angulaire 400.

Selon le premier exemple représenté, la première direction V1 du vent permet de placer la première course CRS1 dans le vent.

Par contre, la deuxième direction V2 du vent induit le placement de la deuxième course CRS2 selon une limite 401 du secteur angulaire 400.

En outre et en référence à la figure 3, durant l'étape de paramétrage, le système 7 paramètre une distance latérale LOV.

Selon une première variante, la distance latérale LOV est paramétrée par un équipage. Ainsi, cet équipage choisit une distance latérale LOV par exemple à partir d'une liste comprenant une pluralité de distances latérales mémorisées.

Selon une deuxième variante, le module de paramétrage 10 fixe la distance latérale à une valeur prédéterminée mémorisée.

Selon une troisième variante, le module de paramétrage 10 calcule la distance latérale.

Par suite, le module de paramétrage 10 calcule une distance théorique minimale COMPUTED LOV en appliquant la première relation suivante :

$$COMPUTED\ LOV = 2*max[HPL; HPL5'] + HPL\ BUFFER + TPE$$

où « COMPUTED LOV » représente ladite distance théorique minimale, « TPE » représente ladite erreur de positionnement de la plateforme cible choisie, « HPL BUFFER » représente une marge fixe mémorisée, « HPL » représente un rayon d'intégrité de position courant, « HPL5' » représente un rayon prédit, « * » représente le signe de la multiplication.

Le rayon d'intégrité de position qualifié de « courant » représente le rayon d'intégrité de position déterminé à l'instant courant auquel la distance théorique minimale est calculée. A l'inverse, le rayon prédit représente le rayon d'intégrité de position qui sera atteint à l'issue d'une durée prédéterminée.

Le rayon d'intégrité de position HPL (selon l'acronyme anglais HPL signifiant « Horizontal Protection Limit ») et le rayon prédit HPL5' sont des données usuellement déterminées par un système de localisation GNSS. Ces données sont donc transmises au module de paramétrage 10 par ce système de localisation GNSS,

Dès lors, le module de paramétrage 10 compare la distance théorique minimale calculée à des distances mémorisées dans une liste.

Le module de paramétrage 10 considère alors que la valeur de la distance latérale est égale à la valeur de la plus petite distance mémorisée supérieure à ladite distance théorique minimale.

Par exemple, la distance théorique minimale calculée vaut 0.38 Nm. En outre, la liste de distances comporte éventuellement les distances suivantes : 0.25, 0.3, 0.35, 0.4. 0.5, 0.6, 0.75. Dès lors, le module de paramétrage 10 paramètre automatiquement la distance latérale en lui assignant alors la valeur de 0.4 Nm.

A l'issue de l'étape de paramétrage, le système 7 élabore une trajectoire d'approche en utilisant les attributs et les informations paramétrées.

Durant une étape de construction STP3, le module de navigation élabore une trajectoire d'approche à suivre pour rejoindre la zone cible choisie en fonction des attributs présents dans la base de données 5, et des informations paramétrées durant l'étape de paramétrage STP2.

La figure 10 présente la trajectoire élaborée par le module de navigation. Plus précisément, la partie inférieure de la figure 10 présente une vue de côté et donc en élévation de la trajectoire élaborée pour se rendre sur une zone cible choisie d'une plateforme 46. La partie supérieure de la figure 10 présente une vue de dessus de la trajectoire élaborée.

Le module de navigation détermine notamment la position d'un point d'approche initiale IAF, d'un point d'approche finale FAF, et d'un point de décision MAP en fonction desdites informations et desdits attributs.

Eventuellement, un point de palier LPO est aussi déterminé.

Le point d'approche initiale IAF, le point d'approche finale FAF, le point de décision MAP, et le cas échéant le point de palier LPO sont agencés dans un même plan vertical 100. Ce plan vertical 100 est parallèle à la course CRS paramétrée.

Par contre, le plan vertical 100 est décalé latéralement d'une distance orthogonale D0 par rapport à la plateforme, et notamment à la zone cible choisie Ainsi, ce plan vertical 100 n'est pas dirigé sur la plateforme cible.

Un décalage vers la gauche ou vers la droite du plan vertical par rapport à la plateforme est éventuellement paramétré durant l'étape de paramétrage STP2.

Si la zone cible choisie est le centre géométrique de la plateforme, la distance orthogonale D0 est égale à la somme de la distance latérale LOV paramétrée précédemment et du rayon d'obstacle OR associé à la zone cible choisie.

Si la zone cible choisie est une zone d'atterrissage 51, la distance orthogonale D0 est égale à la somme de la distance latérale LOV paramétrée précédemment.

Le point de décision MAP et le cas échéant le point de palier LPO sont disposés à une hauteur égale à l'altitude minimale de décision MDA.

En outre, le module de navigation détermine la position du point de décision MAP en déterminant une distance longitudinale D1 le séparant d'un plan tangent 101 passant par les coordonnées géographiques de la zone cible choisie et orthogonal au plan vertical 100 selon la relation suivante :

$$D1 = D0 / \tan(\alpha)$$

où « / » représente le signe de la division, « D0 » représente ladite distance orthogonale. « a » représente un angle de décalage fixé par le constructeur.

L'angle de décalage a peut valoir 30 degrés.

En référence à la figure 8. le point de décision est plus ou moins éloigné d'une zone d'atterrissage en fonction du choix de la zone cible,

Par exemple, si l'équipage a choisi le centre géométrique en tant que cible, la zone d'atterrissage 52 située à gauche du centre géométrique est relativement éloignée du point de décision MAP. A l'inverse, la zone d'atterrissage 52 située à droite du centre géométrique est relativement proche du point de décision MAP.

Dès lors, durant l'étape de paramétrage, le système peut afficher sur un écran une représentation présentant les informations de la figure 8. Dès lors, un équipage peut choisir la zone cible la plus adaptée à son besoin.

En référence à la figure 10, si la trajectoire d'approche comprend un point de palier LPO, le point de palier est placé à une distance de palier DLPO égale à :

$$DLPO = k1$$

où « DLPO » représente la distance de palier, « k1 » représente une constante d'approche fixée par le constructeur.

Par ailleurs, le point d'approche finale FAF et le point d'approche initiale IAF sont agencés à une altitude minimale de sécurité MSA.

Cette attitude minimale de sécurité MSA est soit égale à une altitude minimale de sécurité seuil HMSS, soit égale à la somme de d'une hauteur HPFM mémorisée d'un sommet de la plateforme à atteindre et d'une constante minimale de sécurité CMIN prédéterminée par le constructeur. La valeur la plus haute des deux valeurs obtenues ainsi est alors utilisée soit :

$$MSA = \max (HMSS, CMIN + HPFM)$$

L'altitude minimale de sécurité seuil HMSS peut valoir 1000 ft. De même, la constante minimale de sécurité CMIN peut valoir 500 ft.

Le point d'approche finale FAF est alors positionné à une distance d'approche finale DFAF du point de décision MAP égale à

$$DFAF = k1 + \frac{MSA - MINI}{\tan \beta}$$

où « DFAF » représente la distance d'approche finale, « k1 » représente une constante d'approche fixée par le constructeur, « MSA » représente une altitude minimale de sécurité à laquelle est positionné le point d'approche finale, « MINI » représente ladite altitude minimale de décision MDA, « $\beta$ » représente l'angle d'un segment de vol en descente reliant le point d'approche finale à un plan horizontal contenant ledit point de décision MAP.

Le point d'approche initiale IAF est alors à une distance d'approche initiale DIAF du point de décision MAP égale à

$$DIAF = k1 + \frac{MSA - MINI}{\tan \beta} + k2$$

où « DIAF » représente la distance d'approche initiale, « k1 » représente une constante d'approche fixée par le constructeur, « k2 » représente une variable figée par le constructeur, « MSA » représente une altitude minimale de sécurité à laquelle est positionné le point d'approche finale, « MINI » représente ladite altitude minimale de décision MDA, « $\beta$ » représente l'angle d'un segment de vol en descente reliant le point d'approche finale à un plan horizontal contenant ledit point de décision MAP .

Cette trajectoire peut aussi comprendre un point de virage TP connu sous l'expression anglaise « turning point » situé en amont du point d'approche initiale IAF.

Lorsque la trajectoire est élaborée, le procédé peut autoriser la modification de ladite trajectoire tant qu'un point de fixation prédéterminé situé en amont du point d'approche initiale IAF n'est pas atteint.

Par exemple, la trajectoire peut être définitivement gelée une minute avant d'atteindre le point de virage TP.

Ainsi, durant une étape de modification STP31, l'équipage peut modifier la trajectoire.

En outre, une étape de vérification STP32 peut aussi être entreprise.

Par exemple, cette étape de vérification peut être réalisée une fois, par exemple tant que l'aéronef est situé à plus de trois minutes du point d'approche initiale IAF ou que l'aéronef est situé à plus de deux minutes du point de virage TP.

Lors de cette étape de vérification, le module de vérification 17 détermine si la distance latérale dite « distance latérale courante » ayant servie à l'élaboration de la trajectoire est compatible avec l'intégrité de position fournie par le système de localisation GNSS 20.

Ce module de vérification 17 calcule alors la distance théorique minimale COMPUTED LOV selon la première relation précédente en sollicitant le système de localisation GNSS 20.

Le module de vérification réalise ce calcul, même si le calcul a été effectué lors de l'étape de préparation STP2. En effet, l'intégrité de position fournie par le système de localisation GNSS 20 peut s'être dégradée depuis la réalisation de l'étape de préparation STP2.

Dès lors, le module de vérification 17 compare la distance latérale courante à la distance théorique minimale.

Lorsque ladite distance latérale courante est inférieure à ladite distance théorique minimale, deux alternatives sont envisageables.

Ainsi, si la plus grande distance mémorisée dans la liste explicitée précédemment est inférieure à la distance théorique minimale calculée le système 7 indique à l'équipage d'abandonner l'approche par le biais d'une alerte sonore ou visuelle.

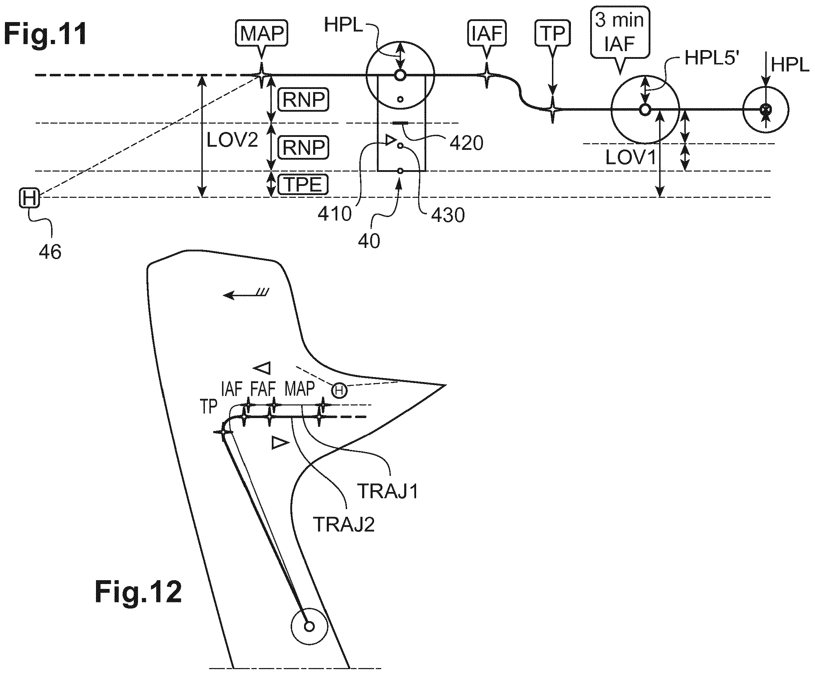

Dans la négative et en référence à la figure 11, le module de vérification augmente la distance latérale courante LOV1 pour obtenir une distance latérale amendée LOV2. Cette distance latérale amendée LOV2 est égale à la valeur de la plus petite distance mémorisée dans ladite liste qui est supérieure à ladite distance théorique minimale.

L'étape de construction STP3 est alors remise en œuvre en remplaçant ladite distance latérale courante par ladite distance latérale amendée.

En référence à la figure 12, le système élabore une nouvelle trajectoire TRAJ2, en remplacement de la trajectoire TRAJ1 initiale.

Le système 7 peut aussi générer une alerte lorsqu'une distance latérale amendée est calculée.

Lorsque la trajectoire est gelée, le module de navigation peut requérir le guidage de l'aéronef vers le point d'approche initiale IAF. Le point d'approche initiale IAF peut par exemple être rejoint par le biais d'un virage passant par un point de virage TP connu sous l'expression anglaise « turning point ».

Dès lors, la trajectoire d'approche élaborée est suivie durant une phase de vol d'approche STP4 :

- soit par le biais d'un contrôle manuel de l'aéronef opéré totalement par l'équipage éventuellement à l'aide de données d'aide au pilotage affichées sur au moins un instrument de vol 40,

- soit par le biais d'un contrôle manuel de l'aéronef opéré par l'équipage et par le biais d'un contrôle automatique opéré par le système de pilotage automatique, l'équipage gérant le pilotage vertical de l'aéronef et le système de pilotage automatique gérant le pilotage horizontal de l'aéronef par exemple,

- soit par le biais d'un contrôle automatique opéré par le système de pilotage automatique.

l'équipage peut alors choisir de mettre fin au suivi de la trajectoire d'approche, ou encore peut requérir une modification de la trajectoire d'approche si nécessaire.

En référence à la figure 10, l'aéronef est dirigé vers le point de décision MAP. Lorsque le point de décision est atteint, si l'équipage visualise la plateforme et si l'atterrissage est possible, l'équipage se dirige vers la plateforme selon la flèche F1. A l'inverse, l'équipage met en place une procédure usuelle visant à diriger l'aéronef vers une trajectoire annexe selon la flèche F2.

Lors de la phase de vol d'approche débutant au point d'approche initiale IAF, le procédé met en œuvre une phase de contrôle d'intégrité.

En référence à la figure 11, préalablement à la phase de vol d'approche et lorsque la trajectoire est gelée, un module de contrôle d'intégrité 16 détermine la valeur de la performance d'intégrité de position RNP requise pour le système de localisation durant l'approche. selon la deuxième relation suivante :

$$RNP = \min\left[(LOV - TPE)/2; k3\right]$$

où « RNP » représente la performance d'intégrité de position requise, « LOV » représente la distance latérale ayant donnée naissance à la trajectoire suivie, « TPE » représente l'erreur de positionnement de la plateforme cible, « k3 » représente une performance d'intégrité seuil de l'ordre de 0.3 Nm par exemple, « / » représente le signe de la division.

Durant une étape de surveillance mise en œuvre lors de la phase de vol d'approche, le module de contrôle d'intégrité compare la performance d'intégrité de position RNP et le rayon d'intégrité de position HPL courant transmis par le système de localisation GNSS 20.

Le module de contrôle d'intégrité génère une alerte si le rayon d'intégrité de position HPL courant est supérieur à la performance d'intégrité de position RNP pour que l'équipage abandonne l'approche.

En outre, la figure 11 illustre un indicateur de situation horizontale 40.

Cet indicateur de situation horizontale 40 est muni d'une échelle comprenant une pluralité de plots 430. Dès lors, l'indicateur de situation horizontale 40 positionne sur l'échelle un premier symbole 420 matérialisant la trajectoire d'approche et un deuxième symbole 410 matérialisant l'écart de position latéral de l'aéronef par rapport à la trajectoire à suivre.

**Revendications**

1. Procédé pour faciliter l'approche d'une plateforme (46) avec un aéronef (1) comprenant :

- une étape préparatoire (STP1) pour construire une base de données (5) de plateformes incluant pour chaque plateforme (46) au moins un attribut,
- une étape de paramétrage (STP2) à bord de l'aéronef dans un module de paramétrage (10) pour déterminer les informations suivantes :

∘ une course (CRS) à suivre pour rejoindre une plateforme dite « plateforme cible » à atteindre,
∘ un paramètre de hauteur relatif à une altitude minimale de décision (MDA) d'un point de décision (MAP) pour une descente en approche finale vers ladite plateforme cible,

- une étape de construction (STP3) pour construire une trajectoire d'approche mise en œuvre par un module de navigation (15),

**caractérisé en ce que** :

- durant ladite étape préparatoire (STP1), pour au moins une plateforme, on mémorise:

  - des attributs définissant au moins une zone cible matérialisant une destination, ladite au moins une zone cible incluant le centre géométrique (50) de la plateforme, lesdits attributs comprenant pour ledit centre géométrique (50) des coordonnées géographiques dudit centre géométrique (50), au moins une hauteur dudit centre géométrique et un rayon dit « rayon d'obstacle » (OR) d'un cercle centrée sur ledit centre géométrique (50) dans lequel est inscrite la plateforme, et
  - des attributs définissant au moins une zone cible de type zone d'atterrissage (51) de la plateforme distincte dudit centre géométrique, lesdits attributs mémorisés incluant des coordonnées géographiques de cette zone d'atterrissage et au moins une hauteur de cette zone d'atterrissage;

- durant ladite étape de paramétrage (STP2), on détermine une distance latérale (LOV), et on détermine une zone cible dite « zone cible choisie » sélectionnée parmi les zones cibles mémorisées,
- durant l'étape de construction (STP3) :

  - si ladite zone cible choisie correspond au centre géométrique (50) d'une plateforme (46), on construit ladite trajectoire d'approche en déterminant la position d'un point d'approche initiale (IAF), d'un point d'approche finale (FAF), d'un point de décision (MAP) en réponse auxdites informations et auxdits attributs de la zone cible choisie, le point d'approche initiale (IAF) ainsi que le point d'approche finale (FAF) ainsi que le point de décision (MAP) étant présents dans un même plan vertical (100) dirigé parallèlement à ladite course (CRS), ledit centre géométrique correspondant à ladite zone cible choisie étant décalé par rapport à ce plan vertical (100) d'une distance orthogonale (D0) égale à la somme de ladite distance latérale (LOV) et dudit rayon d'obstacle (OR), et
  - si ladite zone cible choisie correspond à une zone d'atterrissage (51) d'une plateforme (46), on détermine la position du point d'approche initiale (IAF), du point d'approche finale (FAF), du point de décision (MAP) en réponse auxdites informations et auxdits attributs de la plateforme cible, le point d'approche initiale (IAF) ainsi que le point d'approche finale (FAF) ainsi que le point de décision (MAP) étant présents dans un même plan vertical (100) dirigé parallèlement à ladite course (CRS) et, ladite zone d'atterrissage étant décalée par rapport à ce plan vertical (100) d'une distance orthogonale (D0) égale à ladite distance latérale (LOV).

2. Procédé selon la revendication 1,
   **caractérisé en ce que** durant ladite étape de paramétrage (STP2) :

   - soit un pilote paramètre manuellement ladite altitude minimale de décision (MDA),
   - soit on détermine automatiquement avec le module de navigation ladite altitude minimale de décision (MDA), cette altitude minimale de décision (MDA) étant la valeur maximale entre d'une part une altitude seuil et, d'autre part la somme de ladite hauteur de la zone cible choisie et d'une constante minimale de décision prédéterminée par le constructeur.

3. Procédé selon la revendication 2,
   **caractérisé en ce que** ledit module de navigation (15) détermine l'heure d'arrivée sur la plateforme cible, ladite altitude seuil variant selon ladite heure d'arrivée.

4. Procédé selon l'une quelconque des revendications 1 à 3,
   **caractérisé en ce que** ledit point de décision (MAP) est positionné en déterminant une distance longitudinale (D1) le séparant d'un plan tangent passant par les coordonnées géographiques de la zone cible choisie et orthogonal au plan vertical selon la relation suivante :

$$D1 = D0 / \tan(\alpha)$$

où « / » représente le signe de la division, « D0 » représente ladite distance orthogonale, « $\alpha$ » représente un angle de décalage fixé par le constructeur.

5. Procédé selon l'une quelconque des revendications 1 à 4,

**caractérisé en ce que** durant l'étape de paramétrage (STP2), on choisit un côté de décalage audit plan vertical (100) par rapport à la plateforme cible.

6. Procédé selon l'une quelconque des revendications 1 à 5,
   **caractérisé en ce que** ledit point d'approche finale (FAF) est positionné à une altitude minimale de sécurité (MSA), ladite altitude minimale de sécurité (MSA) étant égale à la valeur maximale entre d'une part une altitude minimale de sécurité seuil et, d'autre part la somme d'une hauteur d'un sommet de la plateforme cible et d'une constante minimale de sécurité prédéterminée par le constructeur.

7. Procédé selon l'une quelconque des revendications 1 à 6,
   **caractérisé en ce que** ledit point d'approche finale (FAF) est positionné à une distance d'approche finale (DFAF) du point de décision (MAP) égale à

$$DFAF = k1 + \frac{MSA - MINI}{\tan \beta}$$

où « DFAF » représente la distance d'approche finale, « k1 » représente une constante d'approche fixée par le constructeur, « MSA » représente une altitude minimale de sécurité à laquelle est positionné le point d'approche finale, « MINI » représente ladite altitude minimale de décision (MDA), « $\beta$ » représente l'angle d'un segment de vol en descente reliant le point d'approche finale à un plan horizontal contenant ledit point de décision (MAP).

8. Procédé selon la revendication 6,
   **caractérisé en ce que** ledit point d'approche initiale (IAF) est positionné à ladite altitude minimale de sécurité (MSA).

9. Procédé selon l'une quelconque des revendications 1 à 8,
   **caractérisé en ce que** ledit point d'approche initiale (IAF) est positionné à une distance d'approche initiale (DIAF) du point de décision (MAP) égale à

$$DIAF = k1 + \frac{MSA - MINI}{\tan \beta} + k2$$

où « DIAF » représente la distance d'approche initiale, « k1 » représente une constante d'approche fixée par le constructeur, « k2 » représente une variable figée par le constructeur, « MSA » représente une altitude minimale de sécurité à laquelle est positionné le point d'approche finale, « MINI » représente ladite altitude minimale de décision (MDA), « $\beta$ » représente l'angle d'un segment de vol en descente reliant le point d'approche finale à un plan horizontal contenant ledit point de décision (MAP) .

10. Procédé selon l'une quelconque des revendications 1 à 9,
    **caractérisé en ce que** ladite trajectoire d'approche comprend un point de palier (LPO) interposé entre le point d'approche finale (FAF) et le point de décision (MAP), le point de palier étant placé à la même altitude minimale de décision (MDA) que le point de décision (MAP) et à une distance de palier (DLPO) du point de décision (MAP) égale à

$$DLPO = k1$$

où « DLPO » représente la distance de palier, « k1 » représente une constante d'approche fixée par le constructeur.

11. Procédé selon l'une quelconque des revendications 1 à 10,
    **caractérisé en ce qu'**un module de guidage vertical (25) et un module de guidage horizontal (30) communiquent avec un système de pilotage (35) pour guider l'aéronef le long de la trajectoire d'approche élaborée par le module de navigation (15).

12. Procédé selon l'une quelconque des revendications 1 à 11,
    **caractérisé en ce que** ce procédé inclut une étape de guidage sur ledit point d'approche initiale (IAF) calculé.

13. Procédé selon l'une quelconque des revendications 1 à 12,

**caractérisé en ce que** :

- durant ladite étape préparatoire (STP1), pour chaque plateforme on mémorise un attribut relatif à une erreur de positionnement (TPE) de la plateforme,
- préalablement à une phase de vol d'approche débutant au point d'approche initiale (IAF), on détermine avec un module de contrôle d'intégrité (16) la valeur d'une performance d'intégrité de position requise pour un système de localisation de l'aéronef, cette performance d'intégrité de position (RNP) étant égale à la valeur minimale entre d'une part une performance seuil prédéterminée et, d'autre part, le quotient de la différence de ladite distance latérale moins ladite erreur de positionnement de la plateforme cible (TPE) divisée par deux soit :

$$RNP = \min\big[(LOV - TPE)/2; k3\big]$$

où « RNP » représente la performance d'intégrité de position requise, « LOV » représente ladite distance latérale, « TPE » représente ladite erreur de positionnement, « k3 » représente ladite performance seuil prédéterminée, « / » représente le signe de la division,

- durant une étape de surveillance mise en œuvre lors de ladite phase de vol d'approche (STP4), ledit aéronef étant muni d'un système de localisation GNSS (20) déterminant le rayon d'un cercle dans lequel ledit aéronef se situe dit « rayon d'intégrité de position (HPL) »,

  ◦ on compare avec ledit module de contrôle d'intégrité (16) ladite performance d'intégrité de position (RNP) et ledit rayon d'intégrité de position (HPL),
  ◦ on génère une alerte si ledit rayon d'intégrité de position (HPL) est supérieur à ladite performance d'intégrité de position (RNP)

**14.** Procédé selon la revendication 13,
   **caractérisé en ce que** ladite performance seuil prédéterminée a une valeur de 0.3 Nm.

**15.** Procédé selon la revendication 14,
   **caractérisé en ce que**

- durant ladite étape préparatoire (STP1), pour chaque plateforme on mémorise un attribut relatif à une erreur de positionnement (TPE) de la plateforme,
- durant ladite étape de paramétrage (STP2), on détermine une distance latérale (LOV) en :

  ◦ calculant automatiquement la valeur d'une distance théorique minimale (COMPUTED LOV) égale à la somme de ladite erreur de positionnement (TPE) de la plateforme cible, d'une marge prédéterminée (HPL BUFFER) et du double d'une valeur maximale entre d'une part ledit rayon d'intégrité de position (HPL) et, d'autre part, un rayon prédit fourni par le système de localisation GNSS (20) indiquant le rayon d'intégrité de position qui sera atteint à l'issue d'un temps prédéterminé soit :

$$COMPUTED\ LOV = 2*\max[HPL; HPL5']+HPL\ BUFFER+TPE$$

où « COMPUTED LOV » représente ladite distance théorique minimale, « TPE » représente ladite erreur de positionnement, « HPL BUFFER » représente ladite marge, « HPL » représente ledit rayon d'intégrité de position, « HPL5' » représente ledit rayon prédit, « * » représente le signe de la multiplication,
  ◦ en comparant ladite distance théorique minimale à des distances mémorisées dans une liste, ladite distance latérale (LOV) étant égale à la plus petite distance mémorisée supérieure à ladite distance théorique.

**16.** Procédé selon l'une quelconque des revendications 1 à 14,
   **caractérisé en ce que** durant ladite étape de paramétrage (STP2), ladite distance latérale (LOV) est fixée à une valeur prédéterminée mémorisée.

**17.** Procédé selon l'une quelconque des revendications 1 à 14,
   **caractérisé en ce que** durant ladite étape de paramétrage (STP2), ladite distance latérale (LOV) est choisie par un pilote à partir d'une liste comprenant une pluralité de distances latérales mémorisées.

18. Procédé selon l'une quelconque des revendications 1 à 17,
**caractérisé en ce que** suite à ladite étape de construction (STP3), on autorise la modification de ladite trajectoire jusqu'à un point de fixation prédéterminé situé en amont dudit point d'approche initiale (IAF).

19. Procédé selon l'une quelconque des revendications 1 à 18,
**caractérisé en ce que** durant ladite étape préparatoire (STP1), pour chaque plateforme on mémorise un attribut relatif à une erreur de positionnement (TPE) de la plateforme, et **en ce que** durant une étape de vérification (STP32) réalisée préalablement à ladite phase de vol d'approche et suite à ladite étape de construction (STP3) :

- on détermine si une distance latérale dite « distance latérale courante » ayant servie à l'élaboration de la trajectoire est compatible avec le rayon d'intégrité de position calculée par un système de localisation GNSS de l'aéronef en :

  ◦ calculant automatiquement la valeur d'une distance théorique minimale (COMPUTED LOV) égale à la somme de ladite erreur de positionnement (TPE) de la plateforme cible, d'une marge prédéterminée (HPL BUFFER) et du double d'une valeur maximale entre d'une part ledit rayon d'intégrité de position (HPL) et, d'autre part, un rayon prédit fourni par le système de localisation GNSS (20) indiquant le rayon d'intégrité de position qui sera atteint à l'issue d'un temps prédéterminé soit :

$$COMPUTED\ LOV = 2*max[HPL;HPL5']+HPL\ BUFFER+TPE$$

Où « COMPUTED LOV » représente ladite distance théorique minimale, « TPE » représente ladite erreur de positionnement, « HPL BUFFER » représente ladite marge, « HPL » représente ledit rayon d'intégrité de position, « HPL5' » représente ledit rayon prédit, « * » représente le signe de la multiplication,
  ◦ en comparant ladite distance latérale courante à ladite distance théorique minimale,

- lorsque ladite distance latérale courante est inférieure à ladite distance théorique minimale, une liste comprenant une pluralité de distances mémorisées :

  ◦ on abandonne ladite approche si la plus grande distance desdites distances mémorisées est inférieure à ladite distance théorique minimale (COMPUTED LOV), ou
  ◦ on augmente ladite distance latérale courante pour obtenir une distance latérale amendée, cette distance latérale amendée étant égale à la plus petite distance mémorisée dans ladite liste qui est supérieure à ladite distance théorique minimale, puis on remet en oeuvre ladite étape de construction en remplaçant ladite distance latérale courante par ladite distance latérale amendée.

20. Procédé selon la revendication 19,
**caractérisé en ce qu'**on autorise la mise en œuvre de ladite étape de vérification tant que l'aéronef est situé à plus de trois minutes dudit point d'approche initiale (IAF).

21. Procédé selon l'une quelconque des revendications 19 à 20,
**caractérisé en ce qu'**on autorise la mise en œuvre de ladite étape de vérification tant que l'aéronef est situé à plus de deux minutes d'un point de virage à partir duquel l'aéronef doit effectuer un virage pour rallier ledit point d'approche initiale (IAF).

22. Procédé selon la revendication 19,
**caractérisé en ce qu'**on génère une alerte lorsqu'une distance latérale amendée est calculée

23. Procédé selon la revendication 13,
**caractérisé en ce que**, ledit aéronef ayant un indicateur de situation horizontale muni d'une échelle comprenant une pluralité de plots, ledit indicateur de situation horizontale positionnant sur ladite échelle un premier symbole (420) centré au milieu de l'échelle matérialisant la trajectoire d'approche et un deuxième symbole (410) matérialisant l'écart de position latéral de l'aéronef par rapport à la trajectoire d'approche, l'écartement entre ledit premier symbole et le deuxième plot adjacent représentant la valeur de la performance d'intégrité de position (RNP).

24. Système (7) d'aide à la navigation
**caractérisé en ce que**, ledit système (7) d'aide à la navigation est destiné à appliquer le procédé selon l'une quelconque des revendications 1 à 23, ledit système (7) d'aide à la navigation comprenant :

- une base de données incluant pour chaque plateforme (46) au moins un attribut définissant ladite plateforme, au moins un attribut définissant au moins une zone cible matérialisant une destination, ladite au moins une zone cible incluant le centre géométrique (50) de la plateforme, lesdits attributs comprenant pour ledit centre géométrique (50) des coordonnées géographiques dudit centre géométrique (50), au moins une hauteur dudit centre géométrique et un rayon dit « rayon d'obstacle » (OR) d'un cercle centrée sur ledit centre géométrique (50) dans lequel est inscrite la plateforme, et au moins une zone cible de type zone d'atterrissage (51) de la plateforme distincte dudit centre géométrique, lesdits attributs mémorisés incluant des coordonnées géographiques de cette zone d'atterrissage et au moins une hauteur de cette zone d'atterrissage,
- un module de paramétrage destiné à mettre en œuvre l'étape de paramétrage,
- un système de localisation GNSS (20) destiné à déterminer le rayon d'un cercle dans lequel ledit aéronef se situe dit « rayon d'intégrité de position (HPL) »,
- un module de navigation mettant en œuvre l'étape de construction (STP3) pour construire la trajectoire d'approche.

**Patentansprüche**

1. Verfahren zur Erleichterung des Anfliegens einer Plattform (46) mit einem Luftfahrzeug (1), welches umfasst:

- einen Vorbereitungsschritt (STP1) zum Aufbau einer Datenbank (5) von Plattformen, die für jede Plattform (46) mindestens ein Attribut enthält,
- einen Parametrierungsschritt (STP2) an Bord des Luftfahrzeugs in einem Parametrierungsmodul (10) zur Ermittlung der folgenden Informationen :

  ◦ eines zum Erreichen einer "Zielplattform" genannten, zu erreichenden Plattform zu verfolgenden Kurses (CRS),
  ◦ eines Höhenparameters relativ zu einer Mindestentscheidungshöhe (MDA) eines Entscheidungspunktes (MAP) für einen Sinkflug zur finalen Annäherung an die Zielplattform,

- einen Konstruktionsschritt (STP3) zum Konstruieren einer Anflugtrajektorie, ausgeführt durch ein Navigationsmodul (15),

**dadurch gekennzeichnet, dass**:

- während des Vorbereitungsschritts (STP1) für mindestens eine Plattform gespeichert werden:

  - Attribute, die mindestens eine Zielzone definieren, die ein Ziel darstellt, wobei die mindestens eine Zielzone den geometrischen Mittelpunkt (50) der Plattform umfasst, wobei die Attribute für den geometrischen Mittelpunkt (50) geografische Koordinaten des geometrischen Mittelpunkts (50), mindestens eine Höhe des geometrischen Mittelpunkts und einen als "Hindernisradius" (OR) bezeichneten Radius eines auf den geometrischen Mittelpunkt (50) zentrierten Kreises, in den die Plattform eingeschrieben ist, umfassen, und
  - Attribute, die mindestens eine Zielzone vom Typ Landezone (51) der Plattform definieren, die von dem geometrischen Mittelpunkt verschieden ist, wobei die gespeicherten Attribute geografische Koordinaten dieser Landezone und mindestens eine Höhe dieser Landezone umfassen;

- während des Parametrierungsschritts (STP2) ein seitlicher Abstand (LOV) bestimmt wird und aus den gespeicherten Zielzonen eine als "ausgewählte Zielzone" bezeichnete Zielzone bestimmt wird,
- während des Konstruktionsschritts (STP3):

  - wenn die ausgewählte Zielzone dem geometrischen Zentrum (50) einer Plattform (46) entspricht, die Anflugtrajektorie durch Bestimmen der Position eines Anfangsanflugpunkts (IAF), eines Endanflugpunktes (FAF) und eines Entscheidungspunktes (MAP) als Reaktion auf die Informationen und die Attribute der ausgewählten Zielzone konstruiert wird, wobei der Anfangsanflugpunkt (IAF) sowie der Endanflugpunkt (FAF) sowie der Entscheidungspunkt (MAP) in einer gleichen vertikalen Ebene (100) liegen, die parallel zu dem Kurs (CRS) ausgerichtet ist, wobei der geometrische Mittelpunkt, der der ausgewählten Zielzone entspricht, in Bezug auf diese vertikale Ebene (100) um einen orthogonalen Abstand (D0) versetzt ist, der gleich der Summe des seitlichen Abstands (LOV) und des Hindernisradius (OR) ist, und
- wenn die ausgewählte Zielzone einer Landezone (51) einer Plattform (46) entspricht, die Positionen des Anfangsanflugpunkts (IAF), des Endanflugpunkts (FAF), des Entscheidungspunkts (MAP) in Reaktion auf die Informationen und die Attribute der Zielplattform bestimmt werden, wobei der Anfangsanflugpunkt (IAF) sowie der Endanflugpunkt (FAF) sowie der Entscheidungspunkt (MAP) in einer gleichen vertikalen Ebene (100) liegen, die parallel zu dem Kurs (CRS) ausgerichtet ist, und wobei die Landezone in Bezug auf diese vertikale Ebene (100) um einen orthogonalen Abstand (D0) versetzt ist, der gleich dem seitlichen Abstand (LOV) ist.

2. Verfahren nach Anspruch 1,
**dadurch gekennzeichnet, dass** während des Parametrierungsschritts (STP2):

- ein Pilot die Mindestentscheidungshöhe (MDA) manuell einstellt,
- oder die Mindestentscheidungshöhe (MDA) automatisch mit dem Navigationsmodul bestimmt wird, wobei diese Mindestentscheidungshöhe (MDA) der maximale Wert von einerseits einer Schwellenhöhe und andererseits der Summe der Höhe der gewählten Zielzone und einer vom Hersteller vorgegebenen Mindestentscheidungskonstante ist.

3. Verfahren nach Anspruch 2,
**dadurch gekennzeichnet, dass** das Navigationsmodul (15) die Ankunftszeit an der Zielplattform bestimmt, wobei die Schwellenhöhe in Abhängigkeit von der Ankunftszeit variiert.

4. Verfahren nach einem der Ansprüche 1 bis 3,
**dadurch gekennzeichnet, dass** der Entscheidungspunkt (MAP) positioniert wird, indem ein Längsabstand (D1), der ihn von einer durch die geographischen Koordinaten der gewählten Zielzone verlaufenden und zur vertikalen Ebene orthogonalen Tangentialebene trennt, gemäß der folgenden Beziehung bestimmt wird:

$$D1 = D0/\tan(\alpha)$$

wobei "/" für das Divisionszeichen, "D0" für den orthogonalen Abstand und "a" für einen vom Hersteller festgelegten Offset-Winkel steht.

5. Verfahren nach einem der Ansprüche 1 bis 4,
**dadurch gekennzeichnet, dass** während des Parametrierungsschritts (STP2) eine Seite des Versatzes zu der vertikalen Ebene (100) in Bezug auf die Zielplattform ausgewählt wird.

6. Verfahren nach einem der Ansprüche 1 bis 5,
**dadurch gekennzeichnet, dass** der Endanflugpunkt (FAF) bei einer Mindestsicherheitshöhe (MSA) positioniert ist, wobei die Mindestsicherheitshöhe (MSA) gleich dem Maximalwert zwischen einerseits einer Mindestsicherheitshöhenschwelle und andererseits der Summe aus einer Höhe eines Scheitelpunkts der Zielplattform und einer vom Hersteller vorgegebenen Mindestsicherheitskonstante ist.

7. Verfahren nach einem der Ansprüche 1 bis 6,
**dadurch gekennzeichnet, dass** der Endanflugpunkt (FAF) in einer Endanflugdistanz (DFAF) vom Entscheidungspunkt (MAP) positioniert ist, die gleich

$$DFAF = k1 + \frac{MSA - MINI}{\tan\beta}$$

ist, wobei "DFAF" die Endanflugdistanz darstellt, "k1" eine vom Hersteller festgelegte Anflugkonstante darstellt, "MSA" eine Mindestsicherheitshöhe darstellt, bei der der Endanflugpunkt positioniert ist, "MINI" die Mindestentscheidungshöhe (MDA) darstellt, und "$\beta$" den Winkel eines Sinkflugsegments darstellt, das den Endanflugpunkt mit einer horizontalen Ebene verbindet, die den Entscheidungspunkt (MAP) enthält.

**8.** Verfahren nach Anspruch 6,
**dadurch gekennzeichnet, dass** der Anfangsanflugpunkt (IAF) auf der Mindestsicherheitshöhe (MSA) positioniert ist.

**9.** Verfahren nach einem der Ansprüche 1 bis 8,
**dadurch gekennzeichnet, dass** der Anfangsanflugpunkt (IAF) in einer Anfangsanflugdistanz (DIAF) vom Entscheidungspunkt (MAP) positioniert ist, die gleich

$$DIAF = k1 + \frac{MSA - MINI}{\tan \beta} + k2$$

ist, wobei "DIAF" die Anfangsanflugdistanz, "k1" eine vom Hersteller vorgegebene Anflugkonstante, "k2" eine vom Hersteller vorgegebene Variable, "MSA" eine Mindestsicherheitshöhe, auf der der Endanflugpunkt positioniert ist, "MINI" die Mindestentscheidungshöhe (MDA) und "$\beta$" den Winkel eines Sinkflugsegments darstellt, das den Endanflugpunkt mit einer horizontalen Ebene verbindet, die den Entscheidungspunkt (MAP) enthält.

**10.** Verfahren nach einem der Ansprüche 1 bis 9,
**dadurch gekennzeichnet, dass** die Anflugtrajektorie einen Zwischenstufenpunkt (LPO) umfasst, der sich zwischen dem Endanflugpunkt (FAF) und dem Entscheidungspunkt (MAP) befindet, wobei der Zwischenstufenpunkt auf der gleichen Mindestentscheidungshöhe (MDA) wie der Entscheidungspunkt (MAP) und in einer Zwischenstufendistanz (DLPO) vom Entscheidungspunkt (MAP) angeordnet ist, die gleich

$$DLPO = k1$$

ist, wobei "DLPO" die Zwischenstufendistanz und "k1" eine vom Hersteller vorgegebene Anflugkonstante ist.

**11.** Verfahren nach einem der Ansprüche 1 bis 10,
**dadurch gekennzeichnet, dass** ein Vertikalführungsmodul (25) und ein Horizontalführungsmodul (30) mit einem Steuerungssystem (35) kommunizieren, um das Luftfahrzeug entlang der vom Navigationsmodul (15) erstellten Anflugtrajektorie zu führen.

**12.** Verfahren nach einem der Ansprüche 1 bis 11,
**dadurch gekennzeichnet, dass** das Verfahren einen Schritt des Führens zu dem berechneten Anfangsanflugpunkt (IAF) umfasst.

**13.** Verfahren nach einem der Ansprüche 1 bis 12,
**dadurch gekennzeichnet, dass**:

- während des Vorbereitungsschritts (STP1) für jede Plattform ein Attribut gespeichert wird, das sich auf einen Positionierungsfehler (TPE) der Plattform bezieht,
- vor einer Anflugflugphase, die am Anfangsanflugpunkt (IAF) beginnt, mit einem Integritätskontrollmodul (16) der Wert einer für ein Ortungssystem des Luftfahrzeugs erforderlichen Positionsintegritätsleistung bestimmt wird, wobei diese Positionsintegritätsleistung (RNP) gleich dem Minimalwert zwischen einerseits einer vorgegebenen Schwellenleistung und andererseits dem Quotienten aus der Differenz zwischen dem genannten seitlichen Abstand minus dem genannten Positionierungsfehler der Zielplattform (TPE) geteilt durch zwei ist, d.h.

$$RNP = \min\left[(LOV - TPE)/2; k3\right]$$

wobei "RNP" für die geforderte Positionsintegritätsleistung, "LOV" für den seitlichen Abstand, "TPE" für den Positionsfehler, "k3" für die vorgegebene Schwellenleistung und "/" für das Divisionszeichen steht,
- während eines Überwachungsschritts, der während der Anflugphase (STP4) durchgeführt wird, wobei das Luftfahrzeug mit einem GNSS-Ortungssystem (20) ausgestattet ist, das den Radius eines als "Positionsintegritätsradius (HPL)" bezeichneten Kreises bestimmt, in dem sich das Luftfahrzeug befindet,

◦ mit dem Integritätskontrollmodul (16) die Positionsintegritätsleistung (RNP) und der Positionsintegritätsradius (HPL) verglichen werden,

◦ eine Warnung erzeugt wird, wenn der Positionsintegritätsradius (HPL) größer ist als die Positionsintegritätsleistung (RNP).

**14.** Verfahren nach Anspruch 13,
**dadurch gekennzeichnet, dass** die vorgegebene Schwellenleistung einen Wert von 0,3 Nm hat.

**15.** Verfahren nach Anspruch 14,
**dadurch gekennzeichnet, dass**

- während des Vorbereitungsschritts (STP1) für jede Plattform ein Attribut gespeichert wird, das sich auf einen Positionierungsfehler (TPE) der Plattform bezieht,
- während des Parametrierschritts (STP2) ein seitlicher Abstand (LOV) bestimmt wird durch

◦ automatisches Berechnen des Wertes eines theoretischen Mindestabstandes (COMPUTED LOV), der gleich der Summe des Positionierungsfehlers (TPE) der Zielplattform, einer vorgegebenen Marge (HPL BUFFER) und dem zweifachen Maximalwert von einerseits dem Positionsintegritätsradius (HPL) und andererseits einem vom GNSS-Positionierungssystem (20) gelieferten vorhergesagten Radius ist, der den Positionsintegritätsradius angibt, der am Ende einer vorgegebenen Zeit erreicht wird, d.h.:

$$COMPUTED\ LOV = 2*max[HPL;HPL5']+HPL\ BUFFER+TPE$$

wobei "COMPUTED LOV" für den theoretischen Mindestabstand, "TPE" für den Positionierungsfehler, "HPL BUFFER" für den Spielraum, "HPL" für den Positionsintegritätsradius, "HPL5" für den vorhergesagten Radius und "*" für das Multiplikationszeichen steht,

◦ Vergleichen des theoretischen Mindestabstands mit in einer Liste gespeicherten Abständen, wobei der seitliche Abstand (LOV) gleich dem kleinsten gespeicherten Abstand ist, der größer als der theoretische Abstand ist.

**16.** Verfahren nach einem der Ansprüche 1 bis 14,
**dadurch gekennzeichnet, dass** während des Parametrierungsschritts (STP2) der seitliche Abstand (LOV) auf einen gespeicherten vorgegebenen Wert eingestellt wird.

**17.** Verfahren nach einem der Ansprüche 1 bis 14,
**dadurch gekennzeichnet, dass** während des Parametrierungsschritts (STP2) der seitliche Abstand (LOV) von einem Fahrer aus einer Liste mit mehreren gespeicherten seitlichen Abständen ausgewählt wird.

**18.** Verfahren nach einem der Ansprüche 1 bis 17,
**dadurch gekennzeichnet, dass** nach dem Konstruktionsschritt (STP3) erlaubt wird, die Trajektorie bis zu einem vorgegeben Fixierungspunkt, der sich vor dem Anfangsanflugpunkt (IAF) befindet, zu modifizieren.

**19.** Verfahren nach einem der Ansprüche 1 bis 18,
**dadurch gekennzeichnet, dass** während des Vorbereitungsschritts (STP1) für jede Plattform ein Attribut gespeichert wird, das sich auf einen Positionierungsfehler (TPE) der Plattform bezieht, und dass während eines Verifizierungsschritts (STP32), der vor der Anflugflugphase und im Anschluss an den Konstruktionsschritt (STP3) durchgeführt wird,

- ermittelt wird, ob ein als "aktueller seitlicher Abstand" bezeichneter seitlicher Abstand, der zur Konstruktion der Trajektorie verwendet worden ist, mit dem von einem GNSS-Ortungssystem des Luftfahrzeugs berechneten Positionsintegritätsradius kompatibel ist, indem:

◦ automatisch der Wert eines theoretischen Mindestabstands (COMPUTED LOV) berechnet wird, der gleich der Summe des Positionierungsfehlers (TPE) der Zielplattform, einer vorgegebenen Marge (HPL BUFFER) und des doppelten Maximalwerts von einerseits dem Positionsintegritätsradius (HPL) und andererseits einem vorhergesagten Radius ist, der vom GNSS-Ortungssystem (20) bereitgestellt wird und den Positionsintegritätsradius angibt, der am Ende einer vorgegebenen Zeit erreicht wird, d. h.:

$$COMPUTED\ LOV = 2*max[HPL;HPL5']+HPL\ BUFFER+TPE$$

wobei "COMPUTED LOV" für den theoretischen Mindestabstand, "TPE" für den Positionierungsfehler, "HPL BUFFER" für die Marge, "HPL" für den Positionsintegritätsradius, "HPL5'" für den vorhergesagten Radius und "*" für das Multiplikationszeichen steht,
   ◦ der aktuelle seitliche Abstand mit dem theoretischen Mindestabstand verglichen wird,

- wenn der aktuelle seitliche Abstand kleiner als der theoretische Mindestabstand ist, eine Liste mit einer Mehrzahl von gespeicherten Abständen:

   ◦ der Anflug abgebrochen wird, wenn der größte der gespeicherten Abstände kleiner ist als der theoretische Mindestabstand (COMPUTED LOV), oder
   ◦ der aktuelle seitliche Abstand erhöht wird, um einen geänderten seitlichen Abstand zu erhalten, wobei der geänderte seitliche Abstand gleich dem kleinsten gespeicherten Abstand in der Liste ist, der größer als der theoretische Mindestabstand ist, und dann der Konstruktionsschritt erneut ausgeführt wird, indem der aktuelle seitliche Abstand durch den geänderten seitlichen Abstand ersetzt wird.

20. Verfahren nach Anspruch 19,
**dadurch gekennzeichnet, dass** der Verifizierungsschritt durchgeführt werden darf, solange sich das Luftfahrzeug mehr als drei Minuten von dem Anfangsanflugpunkt (IAF) entfernt befindet.

21. Verfahren nach einem der Ansprüche 19 bis 20,
**dadurch gekennzeichnet, dass** die Durchführung des Verifizierungsschritts erlaubt ist, solange sich das Luftfahrzeug mehr als zwei Minuten von einem Wendepunkt entfernt befindet, von dem aus das Luftfahrzeug wenden muss, um den Anfangsanflugpunkt (IAF) zu erreichen.

22. Verfahren nach Anspruch 19,
**dadurch gekennzeichnet, dass** ein Alarm erzeugt wird, wenn ein geänderter seitlicher Abstand berechnet wird.

23. Verfahren nach Anspruch 13,
**dadurch gekennzeichnet, dass** das Luftfahrzeug einen Horizontallageanzeiger mit einer Skala aufweist, die eine Mehrzahl von Strichen umfasst, wobei der Horizontallageanzeiger auf der Skala ein erstes Symbol (420), das in der Mitte der Skala zentriert ist und den Anflugweg darstellt, und ein zweites Symbol (410), das die seitliche Positionsabweichung des Luftfahrzeugs in Bezug auf den Anflugweg darstellt, positioniert, wobei der Abstand zwischen dem ersten Symbol und dem benachbarten zweiten Strich den Wert der Positionsintegritätsleistung (RNP) darstellt.

24. Navigationshilfesystem (7)
**dadurch gekennzeichnet, dass** das Navigationshilfesystem (7) zur Anwendung des Verfahrens nach einem der Ansprüche 1 bis 23 vorgesehen ist, wobei das Navigationshilfesystem (7) umfasst:

   - - eine Datenbank, die für jede Plattform (46) mindestens ein Attribut, das die Plattform definiert, mindestens ein Attribut, das mindestens eine Zielzone definiert, die ein Ziel darstellt, umfasst, wobei die mindestens eine Zielzone den geometrischen Mittelpunkt (50) der Plattform umfasst, wobei die Attribute für den geometrischen Mittelpunkt (50) geografische Koordinaten des geometrischen Mittelpunkts (50), mindestens eine Höhe des geometrischen Mittelpunkts und einen als "Hindernisradius" (OR) bezeichneten Radius eines auf den geometrischen Mittelpunkt (50) zentrierten Kreises, in den die Plattform eingeschrieben ist, umfassen, und mindestens eine Zielzone vom Typ Landezone (51) der Plattform, die sich von dem geometrischen Mittelpunkt unterscheidet, umfasst, wobei die gespeicherten Attribute geografische Koordinaten dieser Landezone und mindestens eine Höhe dieser Landezone umfassen,
   - ein Parametrierungsmodul zur Durchführung des Parametrierungsschritts
   - ein GNSS-Ortungssystem (20), das dazu bestimmt ist, den als "Positionsintegritätsradius (HPL)" bezeichneten Radius eines Kreises zu bestimmen, in dem sich das besagte Luftfahrzeug befindet,
   - ein Navigationsmodul, das den Konstruktionsschritt (STP3) ausführt, um die Anflugtrajektorie zu konstruieren.

**Claims**

1. Method of facilitating the approach to a platform (46) by an aircraft (1), comprising:

   - a preparatory step (STP1) of constructing a database (5) of platforms including for each platform (46) at least one attribute;
   - a parameter-setting step (STP2) onboard the aircraft in a parameter-setting module (10) to determine the following information:

      ∘ a course (CRS) to be followed in order to reach a target platform to be reached known as a "target platform";
      ∘ a height parameter relative to a minimum decision altitude (MDA) of a decision point (MAP) for a final approach descent towards said target platform;

   - a construction step (STP3) for constructing an approach path implemented by a navigation module (15);

   **characterised in that**

   - during said preparatory step (STP1) for at least one platform,

      - attributes defining at least one target zone constituting a destination are stored, said at least one target zone including the geometrical centre (50) of the platform, said attributes for said geometrical centre (50) comprising geographical coordinates of said geometrical centre (50), at least one height of said geometrical centre and a radius referred to as the "obstacle radius" (OR) of a circle centred on said geometrical centre (50) in which the platform lies; and
      - attributes that define at least one target zone of the landing zone (51) type of the platform distinct from said geometrical centre, said stored attributes including geographical coordinates of this landing zone and at least one height for this landing zone;

   - during said parameter-setting step (STP2), a lateral distance (LOV) is determined, and a target zone is determined referred to as the "selected target zone" selected from the stored target zones;
   - during the construction step (STP3):

      - if said selected target zone is a geometrical centre (50) of a platform (46), said approach path is constructed by determining the positions of an initial approach fix (IAF), and of a final approach fix (FAF), of a decision point (MAP) in response to said information and to said attributes of the selected target zone, the initial approach fix (IAF) as well as the final approach fix (FAF) and the decision point (MAP) being present in the same vertical plane (100) directed parallel to said course (CRS), said geometrical centre corresponding to said selected target zone being offset relative to this vertical plane (100) by an orthogonal distance (D0) equal to the sum of said lateral distance (LOV) plus said obstacle radius (OR), and
      - if said selected target zone is a landing zone (51) of a platform (46), the position of the initial approach fix (IAF), of the final approach fix (FAF), and of the decision point (MAP) in response to said information and to said attributes of the target zone, are determined, the initial approach fix (IAF) as well as the final approach fix (FAF) and the decision point (MAP) being present in the same vertical plane (100) directed parallel to said course (CRS), and said landing zone being offset relative to this vertical plane (100) by an orthogonal distance (D0) equal to the lateral distance (LOV).

2. Method according to claim 1,
   **characterised in that** during said parameter-setting step (STP2) :

      - either a pilot manually sets parameters for said minimum decision altitude (MDA);
      - or said minimum decision altitude (MDA) is determined automatically by the navigation module, this minimum decision altitude (MDA) being the maximum value between firstly a threshold altitude and, secondly, the sum of said height of the selected target zone and of a minimum decision constant predetermined by the manufacturer.

3. Method according to claim 2,
   **characterised in that** said navigation module (15) determines the arrival time at the target platform, said threshold altitude varying depending on said arrival time.

4.  Method according to any one of claims 1 to 3,
    **characterised in that** said decision point (MAP) is positioned by determining a longitudinal distance (D1) separating it from a tangent plane passing through the geographical coordinates of the selected target zone and orthogonal to the vertical plane in accordance with the following relationship:

$$D1 = D0/\tan(\alpha)$$

in which "/" represents the division sign, "D0" represents said orthogonal distance, and "$\alpha$" represents an offset angle set by the manufacturer.

5.  Method according to any one of claims 1 to 4,
    **characterised in that** during the parameter-setting step (STP2), an offset side on the vertical plane (100) is selected relative to the target platform.

6.  Method according to any one of claims 1 to 5,
    **characterised in that** said final approach fix (FAF) is positioned at a minimum safe altitude (MSA), said minimum safe altitude (MSA) being equal to the maximum value between firstly a threshold minimum safe altitude and, secondly, the sum of a height of a top of the target platform plus a minimum safe constant predetermined by the manufacturer.

7.  Method according to any one of claims 1 to 6,
    **characterised in that** said final approach fix (FAF) is positioned at a final approach distance (DFAF) from the decision point (MAP) equal to:

$$DFAF = k1 + \frac{MSA - MINI}{\tan \beta}$$

in which "DFAF" represents the final approach distance, "k1" represents an approach constant set by the manufacturer, "MSA" represents a minimum safe altitude at which the final approach fix is positioned, "MINI" represents said minimum decision altitude (MDA), and "$\beta$" represents the angle of a flight descent segment connecting the final approach fix to a horizontal plane containing said decision point (MAP).

8.  Method according to any one of claims 1 to 6,
    **characterised in that** said initial approach fix (IAF) is positioned at said minimum safe altitude (MSA).

9.  Method according to any one of claims 1 to 8,
    **characterised in that** said initial approach fix (IAF) is positioned at an initial approach distance (DIAF) from the decision point (MAP) equal to:

$$DIAF = k1 + \frac{MSA - MINI}{\tan \beta} + k2$$

in which "DIAF" represents the initial approach distance, "k1" represents an approach constant set by the manufacturer, "k2" represents a variable determined by the manufacturer, "MSA" represents a minimum safe altitude at which the final approach fix is positioned, "MINI" represents said minimum decision altitude (MDA), and "$\beta$" represents the angle of a flight descent segment connecting the final approach fix to a horizontal plane containing said decision point (MAP).

10. Method according to any one of claims 1 to 9, **characterised in that** said approach path includes a levelling-off point (LPO) interposed between the final approach fix (FAF) and the decision point (MAP), the levelling-off point being placed at the same minimum decision altitude (MDA) as the decision point (MAP) and at a levelling-off distance (DLPO) from the decision point (MAP) equal to:

$$DLPO = k1$$

in which "DLPO" represents the levelling-off distance, and "k1" represents an approach constant set by the manufacturer.

11. Method according to any one of claims 1 to 10,
    **characterised in that** a vertical guidance module (25) and a horizontal guidance module (30) communicate with an autopilot system (35) in order to guide the aircraft along the approach path prepared by the navigation module (15).

12. Method according to any one of claims 1 to 11,
    **characterised in that** this method includes a guidance step of providing guidance during said calculated initial approach fix (IAF) .

13. Method according to any one of claims 1 to 12,
    **characterised in that**:

    - during said preparatory step (STP1), for each platform, an attribute relating to a positioning error (TPE) of the platform is stored;
    - prior to an approach flight stage commencing at the initial approach fix (IAF), an integrity-checking module (16) is used to determine the value of a position integrity performance required for a localisation system of the aircraft, this position integrity performance (RNP) being equal to the minimum value between firstly a predetermined performance threshold and, secondly, the quotient of the difference of said lateral distance minus said positioning error for a target platform (TPE) to be reached as divided by two according to the equation:

$$RNP=\min[(LOV-TPE)/2;k3]$$

    in which "RNP" represents the required position integrity performance, "LOV" represents said lateral distance, "TPE" represents said positioning error, "k3" represents said predetermined threshold performance, and "/" represents the division sign; and
    - during a monitoring step performed during said approach flight stage (STP4), said aircraft is provided with a GNSS localisation system (20) determining the radius of a circle in which said aircraft is located referred to as the "position integrity radius (HPL)"

        ∘ using said integrity-checking module (16), said position integrity performance (RNP) is compared with said position integrity radius (HPL); and
        ∘ an alert is generated if said position integrity radius (HPL) is greater than said position integrity performance (RNP).

14. Method according to claim 13,
    **characterised in that** said predetermined performance threshold has a value of 0.3 Nm.

15. Method according to claim 14,
    **characterised in that**

    - during said preparatory step (STP1), for each platform, an attribute relating to a positioning error (TPE) of the platform is stored;
    - during said parameter-setting step (STP2), a lateral distance (LOV) is determined by:

        ∘ automatically calculating the value of a minimum theoretical distance (COMPUTED LOV) that is equal to the sum of said positioning error (TPE) of the target platform, of a predetermined margin (HPL BUFFER), and of twice a maximum value between firstly said position integrity radius (HPL) and, secondly, a predicted radius provided by the GNSS localisation system indicating the position integrity radius that will be reached at the end of a predetermined time period according to the equation:

$$COMPUTED\ LOV=2*\max[HPL,HPL5']+HPLBUFFER+TPE$$

    in which "COMPUTED LOV" represents said minimum theoretical distance, "TPE" represents said positioning error, "HPL BUFFER" represents said margin, "HPL" represents said position integrity radius, "HPL5'" represents said predicted radius, and "*" represents the multiplication sign; and
◦ by comparing said minimum theoretical distance with distances stored in a list, said lateral distance (LOV) being equal to the smallest stored distance that is greater than the minimum theoretical distance.

**16.** Method according to any one of claims 1 to 14,
**characterised in that** during said parameter-setting step (STP2), said lateral distance (LOV) is set at a stored predetermined value.

**17.** Method according to any one of claims 1 to 14,
**characterised in that** during said parameter-setting step (STP2), said lateral distance (LOV) is selected by a pilot from a list comprising a plurality of stored lateral distances.

**18.** Method according to any one of claims 1 to 17,
**characterised in that** following said construction step (STP3), modification of said path is authorised up until a predetermined fixing point located upstream from said initial approach fix (IAF).

**19.** Method according to any one of claims 1 to 19,
**characterised in that** during said preparatory step (STP1), for each platform, an attribute relating to a positioning error (TPE) of the platform is stored, and **in that** during a verification step (STP32) performed prior to said approach flight stage and following said path construction step (STP3) the following steps are performed:

- determining whether a lateral distance referred to as a "current lateral distance" that served to prepare the path is compatible with the position integrity radius calculated by the GNSS localisation system of the aircraft by:

◦ automatically calculating the value of a minimum theoretical distance (COMPUTED LOV) that is equal to the sum of said positioning error (TPE) of the target platform, of a predetermined margin (HPL BUFFER), and of twice a maximum value between firstly said position integrity radius (HPL) and, secondly, a predicted radius provided by the GNSS localisation system (20) indicating the position integrity radius that will be reached at the end of a predetermined time period according to the equation:

$$\text{COMPUTED LOV} = 2 * \max[HPL, HPL5'] + HPLBUFFER + TPE$$

in which "COMPUTED LOV" represents said minimum theoretical distance, "TPE" represents said positioning error, "HPL BUFFER" represents said margin, "HPL" represents said position integrity radius, "HPL5'" represents said predicted radius, and "*" represents the multiplication sign; and
◦ by comparing said current lateral distance with said minimum theoretical distance; and

- when said current lateral distance is less than said minimum theoretical distance, and using a list comprising a plurality of stored distances:

◦ abandoning said approach if the greatest distance of the stored distances is less than said minimum theoretical distance (COMPUTED LOV); or
◦ increasing said current lateral distance in order to obtain an amended lateral distance, this amended lateral distance being equal to the smallest stored distance in said list that is greater than said minimum theoretical distance, then said construction step is implemented again by replacing said current lateral distance by said amended lateral distance.

**20.** Method according to claim 19,
**characterised in that** implementation of said verification step is authorised so long as the aircraft is situated more than three minutes away from the initial approach fix (IAF).

**21.** Method according to either of claims 19 or 20,
**characterised in that** implementation of said verification step is authorised so long as the aircraft is situated more than two minutes away from a turning point at which the aircraft must turn in order to reach said initial approach fix (IAF).

**22.** Method according to claim 19,
**characterised in that** an alert is generated when an amended lateral distance is calculated.

**23.** Method according to claim 13,
**characterised in that**, said aircraft has a horizontal situation indicator provided with a scale comprising a plurality of markers, said horizontal situation indicator positioning on said scale a first symbol (420) centred in the middle of the scale indicating the approach path and a second symbol (410) indicating the difference in lateral position of the aircraft relative to the approach path to be followed, the difference between said first symbol and the adjacent second marker representing the value of the position integrity performance (RNP).

**24.** Aid to navigation system (7)
**characterised in that**, said aid to navigation system (7) is intended to apply the method according to any one of claims 1 to 23, said aid to navigation system (7) comprising:

- a database including for each platform (46) at least one attribute defining said platform, at least one attribute defining at least one target zone constituting a destination, said at least one target zone including the geometrical centre (50) of the platform, said attributes for said geometrical centre (50) comprising geographical coordinates of said geometrical centre (50), at least one height of said geometrical centre and a radius referred to as the "obstacle radius" (OR) of a circle centred on said geometrical centre (50) in which the platform lies, and at least one target zone of the landing zone (51) type of the platform distinct from said geometrical centre, said stored attributes including geographical coordinates of this landing zone and at least one height for this landing zone;
- a parameterisation module intended to implement the parameterisation step;
- a GNSS localization system intended to determine the radius of a circle in which said aircraft is located referred to as the "position integrity radius (HPL)";
- a navigation module implementing the construction step (STP3) for constructing the approach path.

**Fig.1**

**Fig.2**

**Fig.3**

EP 2 996 008 B1

**Fig.4**

**Fig.5**

**Fig.6**

**Fig.7**

**Fig.8**

31

**Fig.9**

**Fig.10**

# Fig.11

MAP · HPL · IAF · TP · 3 min IAF · HPL5' · HPL

RNP · RNP · TPE · LOV2 · LOV1

420 · 410 · 40 · 430 · 46

# Fig.12

TP · IAF · FAF · MAP

TRAJ1 · TRAJ2

EP 2 996 008 B1

## RÉFÉRENCES CITÉES DANS LA DESCRIPTION

**Documents brevets cités dans la description**

- US 20100168939 A

**Littérature non-brevet citée dans la description**

- **N.MCFARLANE.** *A new procedure for North Sea Helicopter Operations, Second GIANT use forum,* 09 Octobre 2008
- EGNOS Offshore Helicopter Approach Procédure. *GIANT GNSS INTRODUCTION IN THE AVIATOR SECTOR,* 24 Janvier 2008
- **K.M DODSON ; J.R.A. STEVENS.** *A North Sea trial to investigate the use of Differential GPS for instrument Approaches to Offshore Platforms, paper presented at the 23rd European Rotorcraft Forum,* Septembre 1997